# EUROPEAN PATENT APPLICATION

(11) **EP 4 411 977 A1**
(43) Date of publication of application: **07.08.2024**
(21) Application number: 22872438.1
(22) Date of filing: 31.03.2022
(51) Int. Cl.: H01M 50/591, H01M 6/02, H01M 10/04, H01M 10/0585, H01M 10/0587, H01M 50/103, H01M 50/15, H01M 50/474, H01M 50/477, H01M 50/54, H01M 50/586, H01M 50/609

(54) **BATTERY, AND METHOD FOR MANUFACTURING BATTERY**

(30) Priority: 27.09.2021 JP 2021157020
(71) Applicant: Vehicle Energy Japan Inc., Ibaraki 312-8505 (JP)
(72) Inventor: EGAWA, Hiroaki, Hitachinaka-shi, Ibaraki 312-8505 (JP)
(74) Representative: Mewburn Ellis LLP
(86) International application number: PCT/JP2022/016966
(87) International publication number: WO 2023/047679

(57) **Abstract**

A battery 1 includes a charge/discharge body 10 including an electrode (a positive electrode 11 and a negative electrode 12) including an electrode tab (a positive electrode tab 11b and a negative electrode tab 12b), a cover (a positive electrode tab cover 66 and a negative electrode tab cover 67) that faces a side section (one side section 10a) of the charge/discharge body 10, from which the electrode tab projects, and covers and insulates the charge/discharge body 10, and a container 51 that houses the charge/discharge body 10 covered by the cover and has conductivity. The cover includes a main body section (a main body section 66a and the like) that covers the side section of the charge/discharge body 10, an insertion section (an insertion section 66b and the like) formed in a cutout shape including an opening at an outer edge 66a1 of the main body section, the electrode tab being inserted into the insertion section, and a wall section (a wall section 66c and the like) that extends in a direction further away from the side section than the main body section and separates an inner surface 51c of the container 51 and the insertion section.

## Description

### Technical Field

The present invention relates to a battery and a manufacturing method for a battery.

### Background Art

There has been a battery configured by housing, in an enclosure, a charge/discharge body including an electrode tab. In such a battery, a cover (an insulating plate and an insulating case) that insulates the charge/discharge body including the electrode tab is known (see, for example, Patent Literature 1).

### Citation List

### Patent Literature

Patent Literature 1: Japanese Patent No. 4342494

### Summary of Invention

### Technical Problem

It is demanded to insulate an electrode tab with a simple configuration in a battery.

### Solution to Problem

In order to solve the problem of the related art described above, a battery of the present invention includes: a charge/discharge body including an electrode including an electrode tab; a cover that faces a side section of the charge/discharge body, from which the electrode tab projects, and covers and insulates the charge/discharge body; and a container that houses the charge/discharge body covered by the cover and has conductivity. The cover includes: a main body section that covers the side section of the charge/discharge body; an insertion section formed in a cutout shape including an opening at an outer edge of the main body section, the electrode tab being inserted into the insertion section; and a wall section that extends in a direction further away from the side section than the main body section and separates an inner surface of the container and the insertion section.

In addition, in order to solve the problem of the related art described above, a manufacturing method for a battery of the present invention includes a step of covering the charge/discharge body with the cover while inserting the electrode tab and the insertion section from a side of the outer edge of the main body section.

### Advantageous Effects of Invention

With the battery of the present invention, it is possible to insulate an electrode tab with a simple configuration. In addition, with the manufacturing method for the battery of the present invention, it is possible to improve the productivity of the battery with a simple configuration.

### Brief Description of Drawings

[Figure 1] Figure 1 is a perspective view showing a battery 1 in a first embodiment.
[Figure 2] Figure 2 is a sectional perspective view showing a periphery of a negative electrode terminal 42 of the battery 1 in the first embodiment.
[Figure 3] Figure 3 is a sectional view showing the periphery of the negative electrode terminal 42 of the battery 1 in the first embodiment.
[Figure 4] Figure 4 is a sectional perspective view showing a periphery of a positive electrode terminal 41 of the battery 1 in the first embodiment.
[Figure 5] Figure 5 is a sectional view showing the periphery of the positive electrode terminal 41 of the battery 1 in the first embodiment.
[Figure 6] Figure 6 is an exploded perspective view showing the battery 1 in the first embodiment.
[Figure 7] Figure 7 is an exploded perspective view showing a charge/discharge body 10 and a positive electrode tab cover 66 of the battery 1 in the first embodiment.
[Figure 8] Figure 8 is a sectional view showing the charge/discharge body 10, the positive electrode tab cover 66, and a positive electrode current collection plate 21 of the battery 1 in the first embodiment.
[Figure 9] Figure 9 is a perspective view showing the charge/discharge body 10 of the battery 1 in the first embodiment and extracting a portion including a positive electrode tab 11b and a negative electrode tab 12 of the charge/discharge body 10 and showing the portion in a lower part.
[Figure 10] Figure 10 is a sectional view showing a part of the charge/discharge body 10 of the battery 1 in the first embodiment.
[Figure 11] Figure 11 is a sectional view showing a part of a charge/discharge body 110 in a modification of the battery 1 in the first embodiment.
[Figure 12] Figure 12 is an exploded perspective view showing the periphery of the negative electrode terminal 42 of the battery 1 in the first embodiment.
[Figure 13] Figure 13 is an exploded perspective view showing a lid 52 and a sealing plug 53 of the battery 1 in the first embodiment.
[Figure 14] Figure 14 is an exploded perspective view showing the periphery of the positive electrode terminal 41 of the battery 1 in the first embodiment.
[Figure 15] Figure 15 is a perspective view showing a state before the positive electrode tab cover 66 is attached to the charge/discharge body 10 of the battery 1 in the first embodiment.
[Figure 16] Figure 16 is a perspective view showing a state after the positive electrode tab cover 66 is attached to the charge/discharge body 10 of the battery 1 in the first embodiment.
[Figure 17] Figure 17 is an exploded perspective view showing the charge/discharge body 10 and a positive electrode tab cover 166 of a battery 2 in a second embodiment.
[Figure 18] Figure 18 is a sectional view showing the charge/discharge body 10, the positive electrode tab cover 166, and the positive electrode current collection plate 21 of the battery 2 in the second embodiment.
[Figure 19] Figure 19 is an exploded perspective view showing a charge/discharge body 210 and a positive electrode tab cover 266 of a battery 3 in a third embodiment.
[Figure 20] Figure 20 is a sectional view showing the charge/discharge body 210, the positive electrode tab cover 266, and the positive electrode current collection plate 21 of the battery 3 in the third embodiment.
[Figure 21] Figure 21 is an exploded perspective view showing a charge/discharge body 310 and a positive electrode tab cover 366 of a battery 4 in a fourth embodiment.
[Figure 22] Figure 22 is a sectional view showing the charge/discharge body 310, the positive electrode tab cover 366, and the positive electrode current collection plate 21 of the battery 4 in the fourth embodiment.
[Figure 23] Figure 23 is an exploded perspective view showing a pair of charge/discharge bodies 210 and a positive electrode tab cover 466 of a battery 5 in a fifth embodiment.
[Figure 24] Figure 24 is a sectional view showing the pair of charge/discharge bodies 210, the positive electrode tab cover 466, and a positive electrode current collection plate 121 of the battery 5 in the fifth embodiment.
[Figure 25] Figure 25 is an exploded perspective view showing the charge/discharge body 10, the positive electrode tab cover 66, and a positive electrode side lower cover 568 of a battery 6 in a sixth embodiment.
[Figure 26] Figure 26 is an exploded perspective view showing a periphery of the charge/discharge body 10, a positive electrode tab cover 566, and a lid 152 of a battery 7 in a seventh embodiment.
[Figure 27] Figure 27 is an exploded perspective view showing a periphery of the charge/discharge body 10, a positive electrode tab cover 666, and the lid 152 of a battery 8 in an eighth embodiment.

### Description of Embodiments

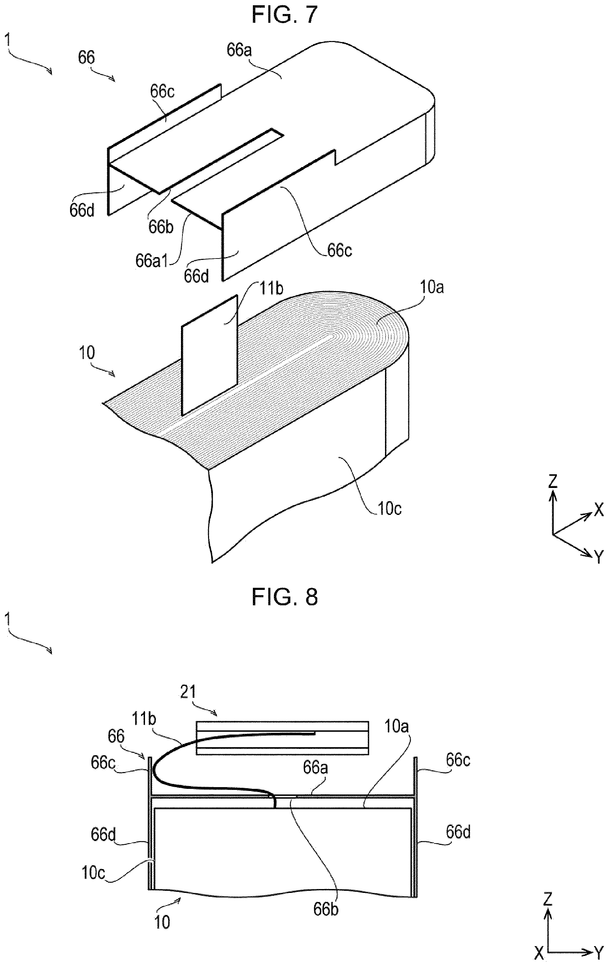

Each of embodiments of the present invention is explained with reference to the drawings. To facilitate understanding of each of the embodiments, sizes and ratios of constituent members are sometimes exaggerated in the drawings. In the drawings, an electrode tab of a charge/discharge body is illustrated shorter than actual length. In particular, electrode tabs shown in Figure 7, Figure 17, Figure 19, Figure 21, and Figure 23 are illustrated shorter compared with electrode tabs shown in Figure 8, Figure 18, Figure 20, Figure 22, and Figure 24 corresponding thereto. In each of the embodiments, the same reference numerals and signs are given to the same components and redundant explanation of the components is omitted. In each of the embodiments, a left-handed XYZ orthogonal coordinate system in which an X axis, a Y axis, and a Z axis are set as coordinate axes is used. Arrows of the axes of the X axis the Y axis, and the Z axis indicate positive directions of the coordinate axes. The X axis is a coordinate axis in a longitudinal direction of a rectangular parallelepiped battery. The Y axis is a coordinate axis in a latitudinal direction of the battery. The Z axis is a coordinate axis in a height direction of the battery. A plane formed by the X axis and the Y axis is referred to as an XY plane, a plane formed by the Y axis and the Z axis is referred to as a YZ plane, and a plane formed by the X axis and the Z axis is referred to as an XZ plane. However, a positional relation represented by the XYZ orthogonal coordinate system is only a relative positional relation.

### [First embodiment]

### (Configuration of battery 1 in first embodiment)

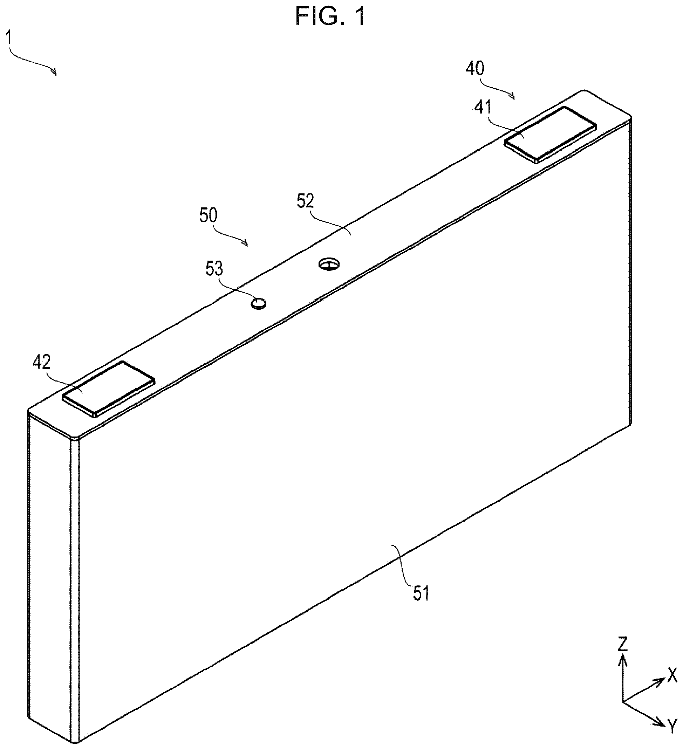

A configuration of a battery 1 is explained with reference to Figure 1 to Figure 14.

The battery 1 includes, for example, as shown in Figure 1 to Figure 5, a charge/discharge body 10 that charges and discharges electricity, a current collector 20 coupled to the charge/discharge body 10, a current blocker 30 coupled to the current collector 20, an external terminal 40 coupled to the current collector 20 or the current blocker 30, and an exterior body 50 in or to which the constituent members of the battery 1 are housed or attached. The battery 1 includes an insulator 60 that insulates the constituent members of the battery 1 and the exterior body 50 and a sealing body 70 that seals the constituent members of the battery 1 and the exterior body 50.

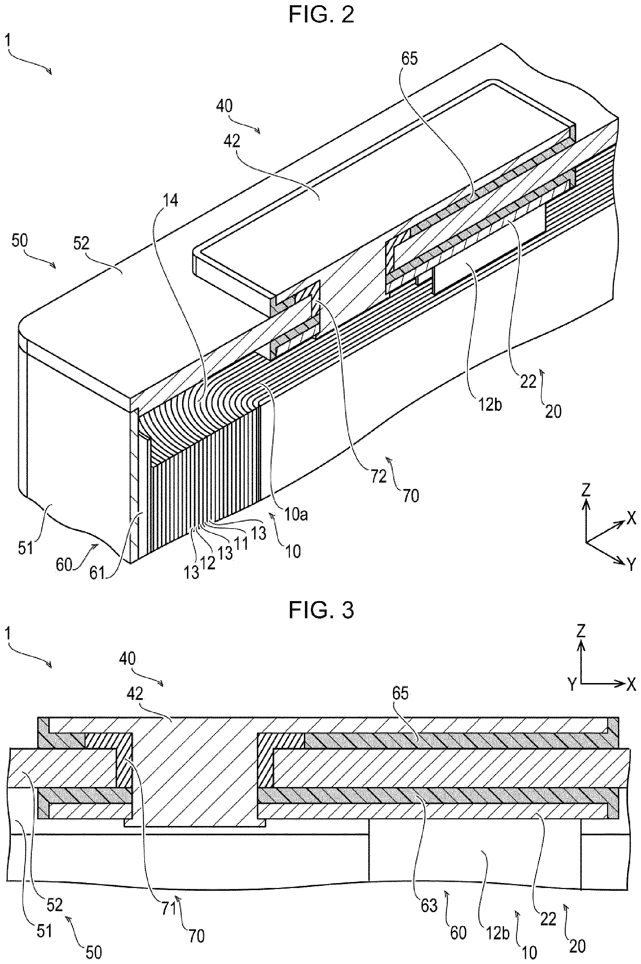

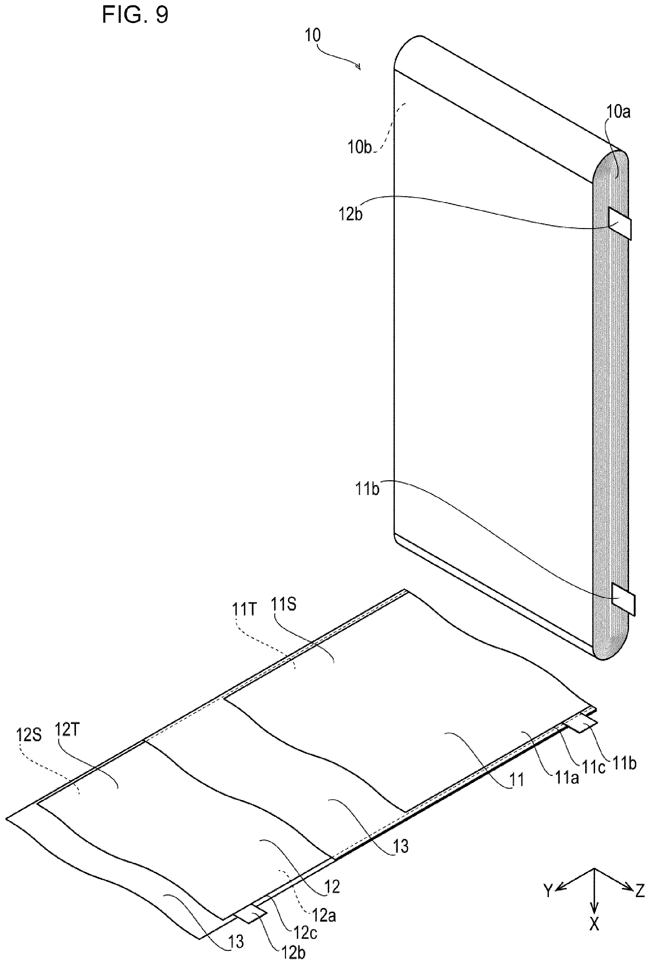

The charge/discharge body 10 charges and discharges electricity. The charge/discharge body 10 shown in Figure 2 to Figure 10 includes a positive electrode 11, a negative electrode 12, separators 13 (insulating members), and an electrolyte 14. The electrodes (the positive electrode 11 and the negative electrode 12) include electrode tabs (a positive electrode tab 11b and a negative electrode tab 12b). As shown in Figure 9, the charge/discharge body 10 is configured by winding, in a rectangular parallelepiped shape, the constituent members stacked in the order of the positive electrode 11, the separator 13, the negative electrode 12, and the separator 13.

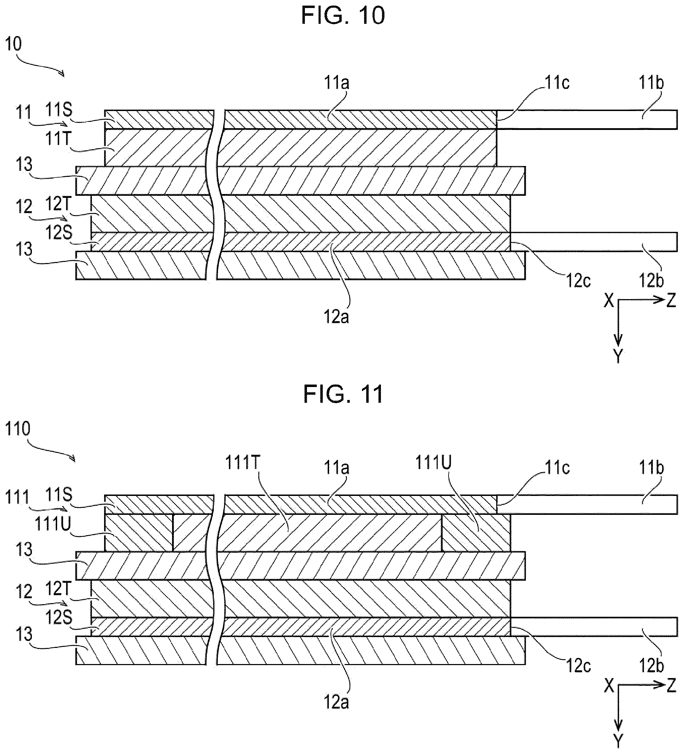

The positive electrode 11 includes, for example, as shown in Figure 9 and Figure 10, a long positive electrode current collection layer 11S and a positive electrode active material layer 11T joined to the positive current collection layer 11S. The positive electrode current collection layer 11S includes a current collection section 11a and the positive electrode tab 11b. The positive electrode active material layer 11T is joined to the current collection section 11a. The positive electrode active material layer 11T faces, for example, the entire area extending in the latitudinal direction of the current collection section 11a (the Z-axis direction).

For example, as shown in Figure 9 and Figure 10, the positive electrode tab 11b projects in the latitudinal direction of the current collection section 11a from a side edge 11c extending in the longitudinal direction of the current collection section 11a. The positive electrode tab 11b is formed integrally with the current collection section 11a. One positive electrode tab 11b is formed in one current collection section 11a. The current collection section 11a is formed by, for example, aluminum or an aluminum alloy.

The positive electrode active material layer 11T includes a positive electrode active material, a binder, a conductive auxiliary agent, and the like formed by a lithium-containing complex oxide. As the lithium-containing complex oxide, for example, a metal element such as nickel (Ni), cobalt (Co), or manganese (Mn) and lithium (Li) are used.

The negative electrode 12 includes, for example, as shown in Figure 9 and Figure 10, a long negative electrode current collection layer 12S and a negative electrode active material layer 12T joined to the negative electrode current collection layer 12S. The negative electrode current collection layer 12S includes a current collection section 12a and the negative electrode tab 12b. The current collection section 12a of the negative electrode 12 is longer in width in the latitudinal direction (the Z-axis direction) compared with the current collection section 11a of the positive electrode 11. Both the ends in the latitudinal direction of the current collection section 11a of the positive electrode 11 are located via the separator 13 within a range extending in the latitudinal direction of the current collection section 12a of the negative electrode 12. The negative electrode active material layer 12T is joined to the current collection section 12a. The negative electrode active material layer 12T faces, for example, the entire area extending in the latitudinal direction of the current collection section 12a.

For example, as shown in Figure 9 and Figure 10, the negative electrode tab 12b projects in the latitudinal direction of the current collection section 12a from a side edge 12c extending in the longitudinal direction of the current collection section 12a. The negative electrode tab 12b projects in the same direction as the direction of the positive electrode tab 11b of the positive electrode 11 in a state in which the negative electrode tab 12b is stacked with the positive electrode 11 via the separator 13. The negative electrode tab 12b is separated from the positive electrode tab 11b of the positive electrode 11 in the state in which the negative electrode tab 12b is stacked with the positive electrode 11 via the separator 13. The negative electrode tab 12b is formed integrally with the current collection section 12a. One negative electrode tab 12b is formed in one current collection section 12a. The current collection section 12a is formed by, for example, copper or a copper alloy.

The negative electrode active material layer 12T includes a negative electrode active material, a binder, a conductive auxiliary agent, and the like formed by a carbon-based material. As the carbon-based material, for example, graphite is used.

For example, as shown in Figure 9 and Figure 10, the separator 13 (an insulator) allows lithium ions to pass while insulating the positive electrode 11 and the negative electrode 12. The separator 13 is formed long. The separator 13 is long in the width in the latitudinal direction (the Z-axis direction) compared with the current collection section 11a of the positive electrode 11 and the current collection section 12a of the negative electrode 12. Both the ends in the latitudinal direction of the current collection section 11a of the positive electrode 11 are located and both ends in the latitudinal direction of the current collection section 12a of the negative electrode 12 are located within a range extending in the latitudinal direction of the separator 13. The separator 13 is made of a porous material. As the separator 13, polyethylene (PE) or polypropylene (PP) is used. A heat resistant insulating member may be used instead of the separator 13. As the heat resistant insulating member, for example, ceramics is used. The configuration explained above is a so-called separatorless configuration.

The electrolyte 14 is equivalent to a so-called electrolytic solution. The electrolyte 14 includes an organic solvent, a supporting electrolyte, and an additive. As the organic solvent, for example, carbonic ester is used. As the supporting electrolyte, for example, lithium salt is used.

A charge/discharge body 110 that is a modification of the charge/discharge body 10 is explained with reference to Figure 11. In the charge/discharge body 110, a configuration of a positive electrode 111 is different from the configuration of the positive electrode 11 in the first embodiment. In a configuration of the charge/discharge body 110, the same reference numerals and signs are added to the same components as the components of the charge/discharge body 10 and explanation of the components is omitted. A positive electrode active material layer 111T of the charge/discharge body 110 faces a portion excluding both the ends extending in the latitudinal direction of the current collection section 11a (the Z-axis direction). A heat resistant insulating layer 111U of the charge/discharge body 110 is joined to both the ends extending in the latitudinal direction of the current collection section 11a and a proximal end portion of the positive electrode tab 11b. The heat resistance insulating layer 111U includes, for example, ceramics.

A current collector 20 is coupled to the positive electrode tab 11b and the negative electrode tab 12b of the charge/discharge body 10. The current collector 20 shown in Figure 2 to Figure 5, Figure 12, and Figure 14 includes a positive electrode current collection plate 21 and a negative electrode current collection plate 22.

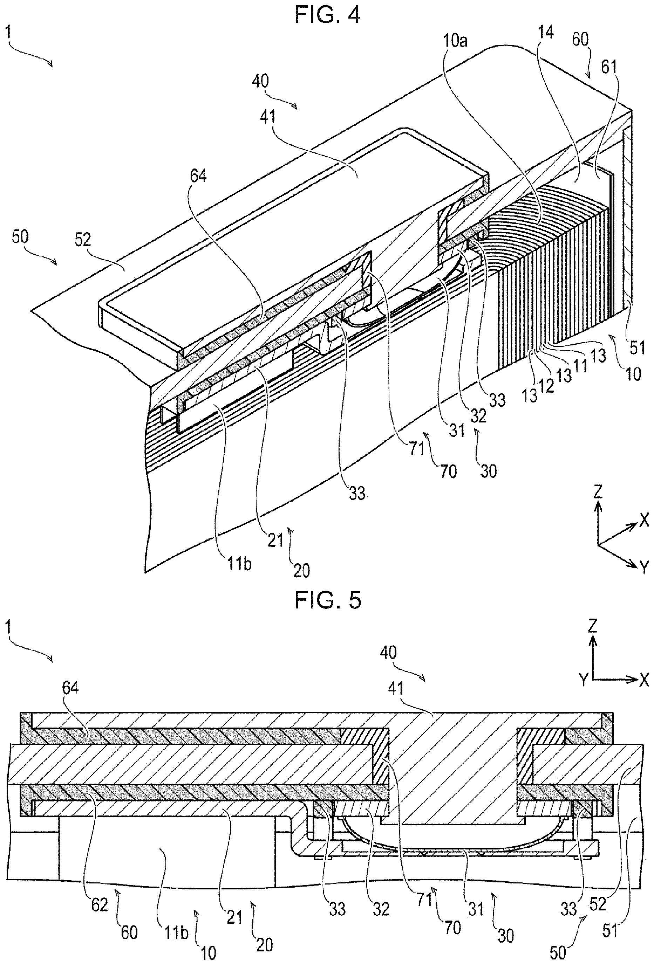

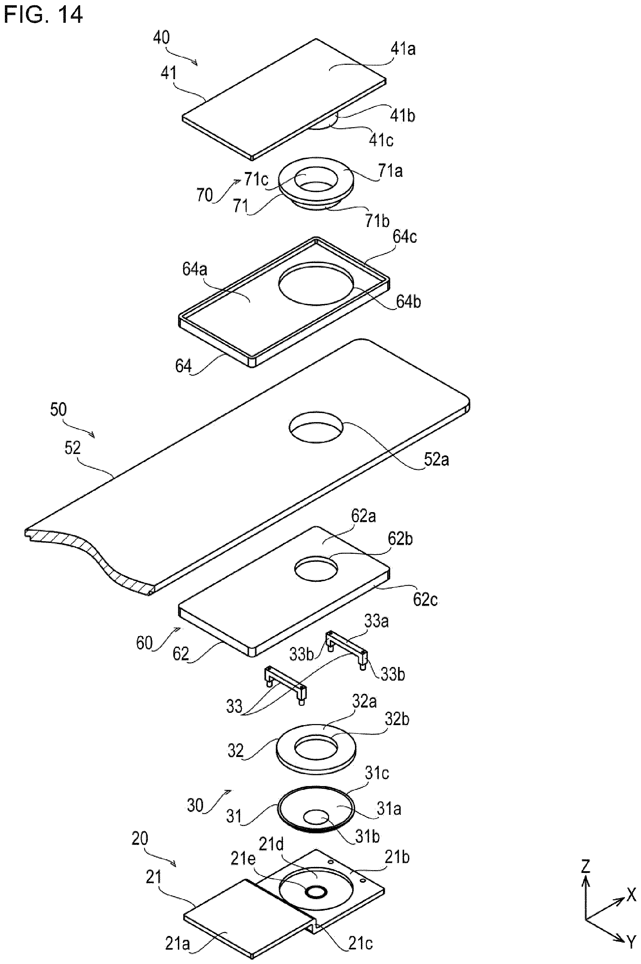

For example, as shown in Figure 4 and Figure 5, the positive electrode current collection plate 21 causes the positive electrode tab 11b of the charge/discharge body 10 and a positive electrode terminal 41 to conduct via the current blocker 30. The positive electrode current collection plate 21 includes, for example, as shown in Figure 14, a rectangular parallelepiped plate-like first base section 21a, a rectangular parallelepiped plate-like second base section 21b, and a coupling section 21c that couples the first base section 21a and the second base section 21b step-wise at different heights. A recess 21d where the second base section 21b is formed thin is formed on the upper surface (the surface on the Z-axis positive direction side) of the second base section 21b. A fragile section 21e, which is a fragile portion hollowed in a ring shape, is formed in the center of the recess 21d. A convex positive electrode joining section 21f projecting downward (in the Z-axis negative direction) is formed in the first base section 21a. The positive electrode joining section 21f is formed in a triangular shape. The positive electrode joining section 21f extends in the longitudinal direction of the charge/discharge body 10 (the X-axis direction) while facing the charge/discharge body 10. The positive electrode joining section 21f has higher rigidity in a stacking direction of the positive electrode tab 11b and the positive electrode current collection plate 21 (the Z-axis direction) than the positive electrode tab 11b. The distal end of the positive electrode joining section 21f and the positive electrode tab 11b are welded. The positive electrode tab 11b is pressed toward the positive electrode joining section 21f when being welded to the positive electrode joining section 21f to thereby be deformed to extend along the convex positive electrode joining section 21f. The positive electrode current collection plate 21 is formed by, for example, aluminum or an aluminum alloy.

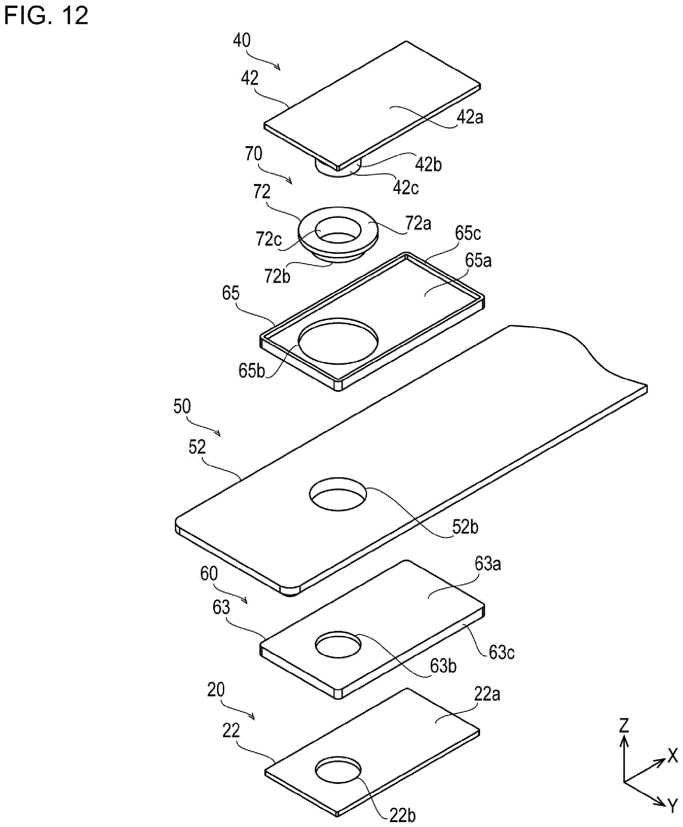

For example, as shown in Figure 2 and Figure 3, the negative electrode current collection plate 22 causes the negative electrode tab 12b of the charge/discharge body 10 and a negative electrode terminal 42 to conduct. The negative electrode current collection plate 22 includes, for example, as shown in Figure 12, a rectangular parallelepiped plate-like base section 22a and an insertion hole 22b piercing through the base section 22a. An insertion section 42b of the negative electrode terminal 42 is inserted into the insertion hole 22b of the negative electrode current collection plate 22. A convex negative electrode joining section 22f projecting downward (in the Z-axis negative direction) is formed in the base section 22a. The negative electrode joining section 22f is formed in a triangular shape. The negative electrode joining section 22f extends in the longitudinal direction of the charge/discharge body 10 (the X-axis direction) while facing the charge/discharge body 10. The negative electrode joining section 22f has higher rigidity in a stacking direction of the negative electrode tab 12b and the negative electrode current collection plate 22 (the Z-axis direction) than the negative electrode tab 12b. The distal end of the negative electrode joining section 22f and the negative electrode tab 12b are welded. The negative electrode tab 12b is pressed toward the negative electrode joining section 22f when being welded to the negative electrode joining section 22f to thereby be deformed to extend along the convex negative electrode joining section 22f. The negative electrode current collection plate 22 is formed by, for example, copper or a copper alloy.

The current blocker 30 is coupled to the current collector 20 and causes the current collector 20 and the positive electrode terminal 41 to conduct. The current blocker 30 shown in Figure 4, Figure 5, and Figure 14 includes a diaphragm 31, a conductive member 32, and a pair of supporting tables 33.

The diaphragm 31 includes, for example, as shown in Figure 14, a curved cylindrical main body section 31a, a disc-shaped first joining section 31b provided on the distal end side (the Z-axis negative direction side) of the main body section 31a, and a ring-like second joining section 31c provided on the proximal end side (the Z-axis positive direction side) of the main body section 31a. The first joining section 31b is joined to the recess 21d of the positive electrode current collection plate 21. The second joining section 31c is joined to the conductive member 32. The diaphragm 31 is formed by, for example, aluminum or an aluminum alloy.

For example, as shown in Figure 14, the conductive member 32 is formed in a cylindrical shape. A positive electrode side first insulating plate 62 is joined to the upper surface (the surface on the Z axis positive direction side) of the conductive member 32. The second joining section 31c of the diaphragm 31 is joined to the peripheral edge of the lower surface (the surface on the Z-axis negative direction side) of the conductive member 32. The conductive member 32 is formed by, for example, aluminum or an aluminum alloy.

The supporting tables 33 include, for example, as shown in Figure 14, rectangular parallelepiped main body sections 33a extending in the latitudinal direction of the battery 1 (the Y-axis direction) and leg sections 33b extending downward (in the Z-axis negative direction) from both the sides in the longitudinal direction of the main body sections 33a (the Y-axis direction). One supporting table 33 is provided at each of both the ends in the longitudinal direction of the battery 1 of the diaphragm 31 (the X-axis direction). The main body sections 33a are attached to the positive electrode side first insulating plate 62. The leg sections 33b are attached to the second base section 21b of the positive electrode current collection plate 21. The supporting tables 33 are formed by, for example, insulating resin.

The external terminal 40 is coupled to the current collector 20 or the current blocker 30. The external terminal 40 shown in Figure 1 to Figure 6, Figure 12, and Figure 14 includes the positive electrode terminal 41 and the negative electrode terminal 42.

For example, as shown in Figure 5, the positive electrode terminal 41 is coupled to the conductive member 32 of the current blocker 30. The positive electrode terminal 41 includes, for example, as shown in Figure 14, a rectangular parallelepiped plate-like base section 41a, a columnar insertion section 41b projecting downward (in the Z-axis negative direction) from the base section 41a, and a cylindrical joining section 41c projecting downward (the Z-axis negative direction) from the peripheral edge of the base section 41a.

For example, as shown in Figure 14, the base section 41a is in contact with a base section 64a of a positive electrode side second insulating plate 64. The insertion section 41b is inserted into an insertion hole 64b of the positive electrode side second insulating plate 64, a positive electrode side insertion hole 52a of a lid 52, an insertion hole 62b of the positive electrode side first insulating plate 62, and an insertion hole 32b of the conductive member 32.

For example, as shown in Figure 14, the joining section 41c projects downward (in the Z-axis negative direction) from the insertion hole 32b of the conductive member 32 and is expanded outward in the radial direction and joined to the conductive member 32. That is, the joining section 41c is caulked at the peripheral edge of the insertion hole 32b of the conductive member 32. Further, the joining section 41c is welded at the peripheral edge of the insertion hole 32b of the conductive member 32. The positive electrode terminal 41 is formed by, for example, aluminum or an aluminum alloy.

For example, as shown in Figure 3, the negative electrode terminal 42 is coupled to the negative electrode current collection plate 22. The negative electrode terminal 42 includes, for example, as shown in Figure 12, a rectangular parallelepiped plate-like base section 42a, a columnar insertion section 42b projecting downward (in the Z-axis negative direction) from the base section 42a, and a cylindrical joining section 42c projecting downward (in the Z-axis negative direction) from the peripheral edge of the base section 42a.

For example, as shown in Figure 12, the base section 42a is in contact with a base section 65a of a negative electrode side second insulating plate 65. The insertion section 42b is inserted into an insertion hole 65b of the negative electrode side second insulating plate 65, a negative electrode side insertion hole 52b of the lid 52, an insertion hole 63b of a negative electrode side first insulating plate 63, and the insertion hole 22b of the negative electrode current collection plate 22.

For example, as shown in Figure 12, the joining section 42c projects downward from the insertion hole 22b of the negative electrode current collection plate 22 and is expanded outward in the radial direction and joined to the negative electrode current collection plate 22. That is, the joining section 42c is caulked at the peripheral edge of the insertion hole 22b of the negative electrode current collection plate 22. Further, the joining section 42c is welded to the peripheral edge of the insertion hole 22b of the negative electrode current collection plate 22. The negative electrode terminal 42 is formed by, for example, copper or a copper alloy.

The constituent members of the battery 1 are housed in or attached to the exterior body 50. The exterior body 50 shown in Figure 1 to Figure 6 and Figure 12 to Figure 14 includes a container 51, the lid 52, and a sealing plug 53.

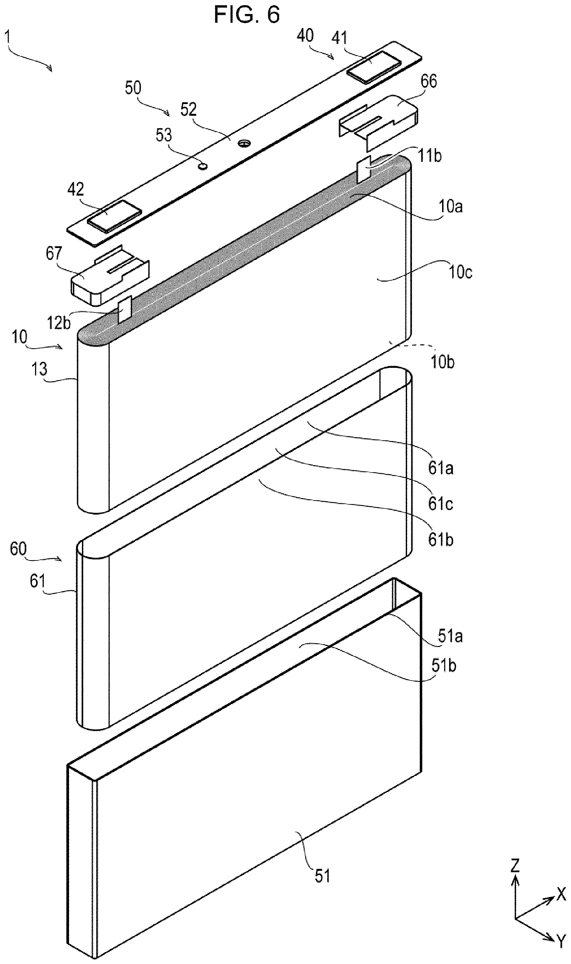

For example, as shown in Figure 2 and Figure 6, the container 51 houses the charge/discharge body 10 and the like covered by an insulation cover 61, a positive electrode tab cover 66, and a negative electrode tab cover 67. The container 51 is configured by a rectangular parallelepiped metal can. The container 51 includes, for example, as shown in Figure 6, an opening 51a opened in the longitudinal direction and an enclosure section 51b stretching to the opening 51a. The container 51 has conductivity. The container 51 is formed by, for example, aluminum or an aluminum alloy.

For example, as shown in Figure 2 and Figure 6, the lid 52 seals the opening 51a of the container 51. The lid 52 faces, in the charge/discharge body 10, one side section 10a (a side section) adjacent to the positive electrode 11, the separators 13, and the negative electrode 12. The lid 52 is formed by a long plate-shaped metal plate. In the lid 52, the positive electrode side insertion hole 52a configured by a circular through-hole is formed on one end side in the longitudinal direction. The insertion section 41b of the positive electrode terminal 41 is inserted into the positive electrode side insertion hole 52a. In the lid 52, the negative electrode side insertion hole 52b configured by a circular through-hole is formed on the other end side in the longitudinal direction. The insertion section 42b of the negative electrode terminal 42 is inserted into the negative electrode side insertion hole 52b.

In the lid 52, a liquid injection hole 52c configured by a circular through-hole is formed between the positive electrode side insertion hole 52a and the negative electrode side insertion hole 52b. The electrolyte 14 is injected from the lid 52 toward the container 51 via the liquid injection hole 52c. the insertion section 53b of the sealing plug 53 is inserted into the liquid injection hole 52c. In the lid 52, a cleavage valve 52d is formed in the center in the longitudinal direction. The lid 52 is welded to the container 51. The lid 52 is formed by, for example aluminum or an aluminum alloy.

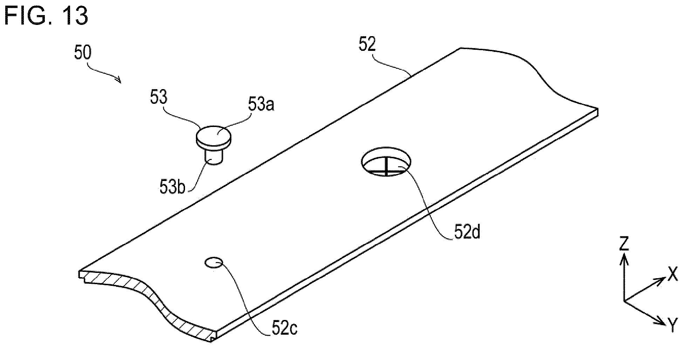

For example, as shown in Figure 13, the sealing plug 53 seals the liquid injection hole 52c of the lid 52. The sealing plug 53 is formed in a columnar shape. The sealing plug 53 includes a head section 53a having a relatively large outer diameter and an insertion section 53b continuing to the head section 53a and having a relatively small outer diameter. The head section 53a of the sealing plug 53 is welded to the lid 52. The sealing plug 53 is formed by, for example, aluminum or an aluminum alloy.

The insulator 60 insulates the constituent members of the battery 1 and the exterior body 50. The insulator 60 shown in Figure 2 to Figure 8, Figure 12, and Figure 14 includes the insulation cover 61, the positive electrode side first insulating plate 62, the negative electrode side first insulating plate 63, the positive electrode side second insulating plate 64, the negative electrode side second insulating plate 65, the positive electrode tab cover 66 (a cover), and the negative electrode tab cover 67 (a cover).

For example, as shown in Figure 6, the insulation cover 61 covers and insulates the charge/discharge body 10. The insulation cover 61 includes a pair of side surfaces (a first side surface 61a and a second side surface 61b) facing each other and an opening 61c that exposes the one side section 10a of the charge/discharge body 10 between the first side surface 61a and the second side surface 61b. The insulation cover 61 covers surfaces other than one surface of the one side section 10a of the charge/discharge body 10. That is, the insulation cover 61 covers the other side section 10b facing the one side section 10a of the charge/discharge body 10 and an outer circumferential surface 10c located between the one side section 10a and the other side section 10b of the charge/discharge body 10. The insulation cover 61 is formed in a pentahedron shape by folding a polyhedral sheet in a box shape. The insulation cover 61 is formed by, for example, polypropylene.

For example, as shown in Figure 5, the positive electrode side first insulating plate 62 insulates the positive electrode current collection plate 21 and the conductive member 32 from the lid 52. The positive electrode side first insulating plate 62 includes, for example, as shown in Figure 14, a rectangular parallelepiped plate-like base section 62a, an insertion hole 62b piercing through the base section 62a, and a projection 62c surrounding the side edge of the base section 62a in an annular shape and projecting in a direction away from the lid 52. In the positive electrode side first insulating plate 62, the positive electrode current collection plate 21, the conductive member 32, and the like are housed in a space formed by the base section 62a and the projection 62c. The insertion section 41b of the positive electrode terminal 41 is inserted into the insertion hole 62b. The positive electrode side first insulating plate 62 is formed by, for example, insulating resin.

For example, as shown in Figure 3, the negative electrode side first insulating plate 63 insulates the negative electrode current collection plate 22 and the lid 52. The negative electrode side first insulating plate 63 includes, for example, as shown in Figure 12, a rectangular parallelepiped plate-like base section 63a, an insertion hole 63b piercing through the base section 63a, and a projection 63c surrounding the side edge of the base section 63a in an annular shape and projecting in a direction away from the lid 52. In the negative electrode side first insulating plate 63, the negative electrode current collection plate 22 is housed in a space formed by the base section 63a and the projection 63c. The insertion section 42b of the negative electrode terminal 42 is inserted into the insertion hole 63b. The negative electrode side first insulating plate 63 is formed by, for example, insulating resin.

For example, as shown in Figure 5, the positive electrode side second insulating plate 64 insulates the positive electrode terminal 41 and the lid 52. The positive electrode side second insulating plate 64 includes, for example, as shown in Figure 14, a rectangular parallelepiped-plate like base section 64a, an insertion hole 64b piercing through the base section 64a, and a projection 64c surrounding the side edge of the base section 64a in an annular shape and projecting in a direction away from the lid 52. In the positive electrode side second insulating plate 64, the positive electrode terminal 41 is housed in a space formed by the base section 64a and the projection 64c. The insertion section 41b of the positive electrode terminal 41 is inserted into the insertion hole 64b. The positive electrode side second insulating plate 64 is formed by, for example, insulating resin.

For example, as shown in Figure 3, the negative electrode side second insulating plate 65 insulates the negative electrode terminal 42 and the lid 52. The negative electrode side second insulating plate 65 includes, for example, as shown in Figure 12, a rectangular parallelepiped plate-like base section 65a, an insertion hole 65b piercing through the base section 65a, and a projection 65c surrounding the side edge of the base section 65a in an annular shape and projecting in a direction away from the lid 52. In the negative electrode side second insulating plate 65, the negative electrode terminal 42 is housed in a space formed by the base section 65a and the projection 65c. The insertion section 42b of the negative electrode terminal 42 is inserted into the insertion hole 65b. The negative electrode side second insulating plate 65 is formed by, for example, insulating resin.

For example, as shown in Figure 6 to Figure 8, the positive electrode tab cover 66 (the cover) faces the one side section 10a of the charge/discharge body 10, from which the positive electrode tab 11b projects, and covers and insulates the charge/discharge body 10. The positive electrode tab cover 66 includes, for example, as shown in Figure 7, a main body section 66a, an insertion section 66b, a pair of wall sections 66c, and a pair of side surface sections 66d.

In the positive electrode tab cover 66, for example, as shown in Figure 7, the main body section 66a, the insertion section 66b, the pair of wall sections 66c, and the pair of side surface sections 66d are integrally formed. The positive electrode tab cover 66 is formed in a tetrahedron shape excluding one surface facing the downward direction of the battery 1 and one surface on a side facing the center side of the battery 1 by folding a polyhedral sheet in a box shape. In the positive electrode tab cover 66, the pair of wall sections 66c extends in the Z-axis direction from the main body section 66a and the pair of side surface sections 66d extends in the Z-axis negative direction from the main body section 66a. The wall sections 66c and the side surface sections 66d stretch in the Z-axis direction with the main body section 66a as a boundary. The pair of side surface sections 66d overlaps at the end portion in the longitudinal direction of the battery 1 (the X-axis direction).

The main body section 66a is formed in a rectangular parallelepiped plate shape. For example, as shown in Figure 8, the main body section 66a covers the one side section 10a in a state in which the main body section 66a is separated from the one side section 10a of the charge/discharge body 10.

For example, as shown in Figure 7, the insertion section 66b is formed in a cutout shape including an opening at an outer edge 66a1 of the main body section 66a. For example, as shown in Figure 8, the positive electrode tab 11b is inserted into the insertion section 66b. The insertion section 66b extends, for example, in the X-axis direction in Figure 7 together with the positive electrode tab 11b, for example, along the side edge 11c of the positive electrode 11 shown in Figure 9.

For example, as shown in Figure 7, the wall sections 66c extend in a direction further away from the one side section 10a than the main body section 66a (the Z-axis direction) and separate an inner surface 51c of the container 51 and the insertion section 66b in the X-axis direction. The wall sections 66c are formed at both the ends in the X-axis direction of the main body section 66a. The pair of wall sections 66c is orthogonal to the main body section 66a. The pair of wall sections 66c is in contact with the inner surface 51c of the container 51. The pair of wall sections 66c extends in, for example, the X-axis direction in Figure 7 together with the positive electrode tab 11b, for example, along the side edge 11c of the positive electrode 11 shown in Figure 9. The pair of wall sections 66c is separated from the insertion section 66b formed in the main body section 66a. As shown in Figure 8, the positive electrode tab 11b curving in the Y-axis direction is in contact with one wall section 66c of the pair of wall sections 66c.

For example, as shown in Figure 7 and Figure 8, the side surface sections 66d extend in a direction approaching the one side section 10a (the Z-axis negative direction) from the main body section 66a and separate the inner surface 51c of the container 51 and the charge/discharge body 10. The side surface sections 66d stretch to the main body section 66a and face the outer circumferential surface 10c of the charge/discharge body 10 between the main body section 66a and the one side section 10a of the charge/discharge body 10. The side surface sections 66d extend in a direction approaching the one side section 10a (the Z-axis negative direction) from the main body section 66a and, for example, as shown in Figure 7, separate the inner surface 51c of the container 51 and the positive electrode tab 11b and the like in the X-axis direction. The side surface sections 66d are formed at both the ends in the X-axis direction of the main body section 66a. The pair of wall sections 66c is orthogonal to the main body section 66a. The pair of side surface sections 66d is in contact with the inner surface 51c of the container 51. The pair of side surface sections 66d stretches to the side surface sections 66d in the Z-axis direction. The pair of side surface sections 66d is not essential in the positive electrode tab cover 66.

The positive electrode tab cover 66 is formed by, for example, polypropylene.

For example, as shown in Figure 6, the negative electrode tab cover 67 (the cover) faces the one side section 10a of the charge/discharge body 10, from which the negative electrode tab 12b projects, and covers and insulates the charge/discharge body 10. The shape and the material of the negative electrode tab cover 67 are the same as the shape of the positive electrode tab cover 66. Like the positive electrode tab cover 66, the negative electrode tab cover 67 includes a main body section, an insertion section, wall sections, and side surface sections. When the Z axis is set as a rotation center, the negative electrode tab cover 67 is configured rotationally symmetrical with the positive electrode tab cover 66. In the negative electrode tab cover 67, the negative electrode tab 12b curving in the Y-axis direction is in contact with one wall section of a pair of wall sections.

The sealing body 70 seals the constituent members of the battery 1 and the exterior body 50. The sealing body 70 shown in Figure 2 to Figure 5, Figure 12, and Figure 14 includes a positive electrode side gasket 71 and a negative electrode side gasket 72.

For example, as shown in Figure 5, the positive electrode side gasket 71 insulates the positive electrode side second insulating plate 64 and the lid 52. The positive electrode side gasket 71 is formed in a cylindrical shape. The positive electrode side gasket 71 includes, for example, as shown in Figure 14, a first insertion section 71a having a relatively large outer diameter, a second insertion section 71b continuing to the first insertion section 71a and having a relatively small outer diameter, and an insertion hole 71c piercing through the first insertion section 71a and the second insertion section 71b. The first insertion section 71a of the positive electrode side gasket 71 is inserted into the insertion hole 64b of the positive electrode side second insulating plate 64. The second insertion section 71b of the positive electrode side gasket 71 is inserted into the positive electrode side insertion hole 52a of the lid 52. The insertion section 41b of the positive electrode terminal 41 is inserted into the insertion hole 71c. The positive electrode side gasket 71 is formed by, for example, rubber having insulation and elasticity.

For example, as shown in Figure 3, the negative electrode side gasket 72 insulates the negative electrode side second insulating plate 65 and the lid 52. The negative electrode side gasket 72 is formed in a cylindrical shape. The negative electrode side gasket 72 includes, for example, as shown in Figure 12, a first insertion section 72a having a relatively large outer diameter, a second insertion section 72b continuing to the first insertion section 72a and having a relatively small outer diameter, and an insertion hole 72c piercing through the first insertion section 72a and the second insertion section 72b. The first insertion section 72a of the negative electrode side gasket 72 is inserted into the insertion hole 65b of the negative electrode side second insulating plate 65. The second insertion section 72b of the negative electrode side gasket 72 is inserted into the negative electrode side insertion hole 52b of the lid 52. The insertion section 42b of the negative electrode terminal 42 is inserted into the insertion hole 72c. The negative electrode side gasket 72 is formed by, for example, rubber having insulation and elasticity.

### (Manufacturing method for battery 1 in first embodiment)

A manufacturing method for the battery 1 is explained with reference to Figure 8, Figure 15, and Figure 16. In the explanation of the manufacturing method for the battery 1 in the first embodiment, a manufacturing process specific to the battery 1 is mainly explained. Specifically, about the manufacturing method for the battery 1, a manufacturing method for covering the charge/discharge body 10 with the positive electrode tab cover 66 is mainly explained. Since a manufacturing method for covering the charge/discharge body 10 with the negative electrode tab cover 67 is the same as the manufacturing method for covering the charge/discharge body 10 with the positive electrode tab cover 66, explanation of the manufacturing method is omitted.

The manufacturing method for the battery 1 in the first embodiment is premised on a configuration in which one positive electrode tab 11b is provided. However, a configuration in which two or more positive electrode tabs are provided may be adopted.

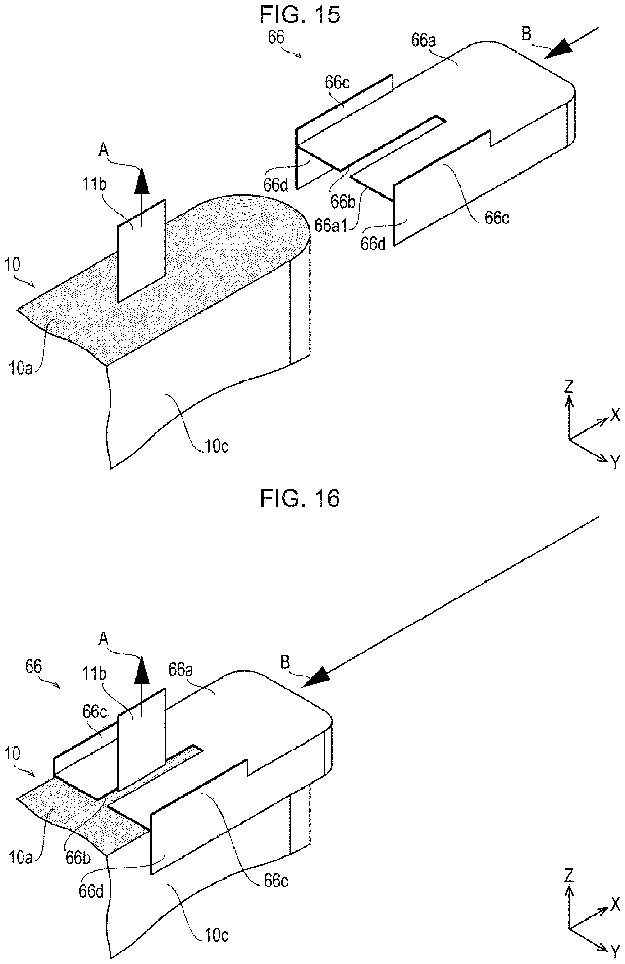

The manufacturing method specific to the battery 1 is a process for, as shown in Figure 15, covering the charge/discharge body 10 with the positive electrode tab cover 66 while inserting the insertion section 66b of the positive electrode tab cover 66 and the positive electrode tab 11b from the side of the outer edge 66a1 of the main body section 66a of the positive electrode tab cover 66.

In the process explained above, in a state in which the positive electrode tab 11b is griped and pulled in an A direction away from the one side section 10a (the Y-axis direction), the positive electrode tab cover 66 is moved in a B direction (the X-axis negative direction) and the positive electrode tab 11b is inserted into the insertion section 66b of the positive electrode tab cover 66.

Thereafter, as shown in Figure 8, the positive electrode tab 11b and the positive electrode current collection plate 21 are joined. Here, the positive electrode tab 11b is included in the charge/discharge body 10. On the other hand, the positive electrode current collection plate 21 is included in the lid 52. When the positive electrode tab 11b and the positive electrode current collection plate 21 are joined, the charge/discharge body 10 and the lid 52 are sufficiently separated and the charge/discharge body 10 and the lid 52 are made, for example, orthogonal, whereby a joining portion of the positive electrode tab 11b and the positive electrode current collection plate 21 is brought into a sufficiently exposed state to the outside. After the positive electrode tab 11b and the positive electrode current collection plate 21 are joined, the charge/discharge body 10 in a state in which the insulation cover 61 and the positive electrode tab cover 66 are attached is inserted into the container 51. Subsequently, the container 51 and the lid 52 in the orthogonal state are caused to face in order to join the container 51 and the lid 52. Subsequently, when the container 51 and the lid 52 are brought close in order to join the container 51 and the lid 52, the positive electrode tab 11b curves in the Y-axis direction from a state in which the positive electrode tab 11b extends in the Z-axis direction. The positive electrode tab 11b curving in the Y-axis direction is likely to come into contact with the wall sections 66c. In Figure 8, the positive electrode tab 11b is in contact with the wall sections 66c.

After the positive electrode tab 11b and the positive electrode current collection plate 21 are joined, the charge/discharge body 10 may be covered by the positive electrode tab cover 66 while the positive electrode tab 11b being inserted into the insertion section 66b of the positive electrode tab cover 66.

Here, in a state in which the container 51 and the lid 52 are joined, it is difficult to set the entire length of the positive electrode tab 11b on the premise that the positive electrode tab 11b is joined to the positive electrode current collection plate 21 in a state in which the positive electrode tab 11b linearly extends toward the positive electrode current collection plate 21. That is, in a state before the container 51 and the lid 52 are joined and the container 51 and the lid 52 are separated from each other, it is necessary to set the entire length of the positive electrode tab 11b large considering that the positive electrode tab 11b and the positive electrode current collection plate 21 need to be joined. Therefore, in a state after the container 51 and the lid 52 are joined, the interval between the one side section 10a of the charge/discharge body 10 and the positive electrode current collection plate 21 decreases compared with the state before the container 51 and the lid 52 are joined. It is necessary to curve the positive electrode tab 11b in the Y-axis direction.

### (Effects of battery 1 and manufacturing method in first embodiment)

Effects of the battery 1 and the manufacturing method for the battery 1 are explained. Effects concerning the positive electrode tab cover 66 are explained below. The effects concerning the positive electrode tab cover 66 and effects concerning the negative electrode tab cover 67 are the same.

In the battery 1, the positive electrode tab cover 66 insulates the positive electrode tab 11b and the container 51. The positive electrode tab cover 66 includes the insertion section 66b that is formed in the cutout shape including the opening at the outer edge 66a1 of the main body section 66a and into which the positive electrode tab 11b is inserted and the wall sections 66c that separate the inner surface 51c of the container 51 and the insertion section 66b. With such a configuration, when the positive electrode tab 11b curves on the inside of the container 51, it is possible to prevent the positive electrode tab 11b from coming into contact with the inner surface 51c of the container 51 by bringing the positive electrode tab 11b into contact with the wall sections 66c. Therefore, in the battery 1, the positive electrode tab 11b can be insulated by a simple configuration.

In the battery 1, since the positive electrode tab cover 66 is provided, it is unnecessary to apply insulation coating to the inner surface 51c of the container 51. In the battery 1, since the positive electrode tab cover 66 is provided, it is unnecessary to sufficiently extend the insulation cover 61 from the outer circumferential surface 10c of the charge/discharge body 10 toward the side of the lid 52. In particular, in the battery 1, since the positive electrode tab cover 66 is provided, it is possible to insulate the charge/discharge body 10 excluding the positive electrode tab 11b and the negative electrode tab 12b and the inner surface 51c of the container 51 simply by slightly extending the insulation cover 61 from the one side section 10a of the charge/discharge body 10 toward the side of the lid 52.

In the manufacturing method for the battery 1, the charge/discharge body 10 is covered by the positive electrode tab cover 66 while the positive electrode tab 11b and the insertion section 66b being inserted from the side of the outer edge 66a1 of the main body section 66a. Therefore, it is possible to easily insert the positive electrode tab 11b and the insertion section 66b formed in the cutout shape. That is, it is possible to extremely easily insert the positive electrode tab 11b into the insertion section 66b in the first embodiment including a portion exposed to the outside on a side surface compared with when the positive electrode tab 11b is inserted into a conventional insertion section without a portion exposed to the outside on a side surface. That is, with such a configuration, it is possible to attach the positive electrode tab cover 66 to the charge/discharge body 10 while inserting the insertion section 66b of the positive electrode tab cover 66 and the positive electrode tab 11b without causing the main body section 66a of the positive electrode tab cover 66 and the positive electrode tab 11b to interfere with each other. Therefore, it is possible to improve the productivity of the battery 1.

In the manufacturing method for the battery 1, the positive electrode tab 11b and the insertion section 66b of the positive electrode tab cover 66 are inserted in the state in which the positive electrode tab 11b is gripped. With such a configuration, it is possible to insert the positive electrode tab 11b and the insertion section 66b of the positive electrode tab cover 66 in a state in which the positive electrode tab 11b is gripped and positioned. Therefore, it is possible to further improve the productivity of the battery 1.

The wall sections 66c of the positive electrode tab cover 66 extend in the X-axis direction along the side edge 11c of the positive electrode 11 together with the positive electrode tab 11b. With such a configuration, by bringing the positive electrode tab 11b extending in the X-axis direction of the battery 1 and curving in the Y-axis direction of the battery 1 into contact with the wall sections 66c, it is possible to sufficiently prevent the positive electrode tab 11b from coming into contact with the inner surface 51c of the container 51. In particular, since the X-axis direction of the battery 1 is the longitudinal direction of the battery 1, it is possible to sufficiently prevent contact of the positive electrode tab 11b and the inner surface 51c of the container 51 by sufficiently extending the wall sections 66c.

The main body section 66a of the positive electrode tab cover 66 is separated from the one side section 10a of the charge/discharge body 10. With such a configuration, it is possible to prevent a load on the one side section 10a due to pressing by the main body section 66a. Since the side surfaces of the positive electrode 11, the separators 13, and the negative electrode 12 are exposed, the main body section 66a preferably does not come into contact with the one side section 10a. It is possible to guide the positive electrode tab 11b in the Z-axis direction with the insertion section 66b between the main body section 66a and the one side section 10a. Therefore, it is possible to prevent the positive electrode tab 11b curving in the Y-axis direction from excessively approaching the one side section 10a. Therefore, in the battery 1, it is possible to sufficiently insulate the positive electrode tab 11b and the side edge 12c of the negative electrode 12.

The wall sections 66c of the positive electrode tab cover 66 are separated from the insertion section 66b. With such a configuration, even if the positive electrode tab 11b is located, for example, in the center in the Y-axis direction of the charge/discharge body 10 and separated from the wall sections 66c, it is possible to insert the positive electrode tab 11b into the insertion section 66b without greatly curving the positive electrode tab 11b in the Y-axis direction.

The positive electrode tab cover 66 includes the side surface sections 66d. With such a configuration, it is possible to position the positive electrode tab cover 66 in the charge/discharge body 10 with the side surface sections 66d. Since the side surface sections 66d are held between the container 51 and the charge/discharge body 10, it is possible to sufficiently position the positive electrode tab cover 66 in the charge/discharge body 10.

In the battery 1 in the first embodiment, the configuration and the effects concerning the positive electrode tab cover 66 (the cover) are explained above. A configuration and effects concerning the negative electrode tab cover (a cover) are the same as the configuration and the effects concerning the positive electrode tab cover 66 explained above.

### [Second Embodiment]

### (Configuration of battery 2 and manufacturing method for battery 2 in second embodiment)

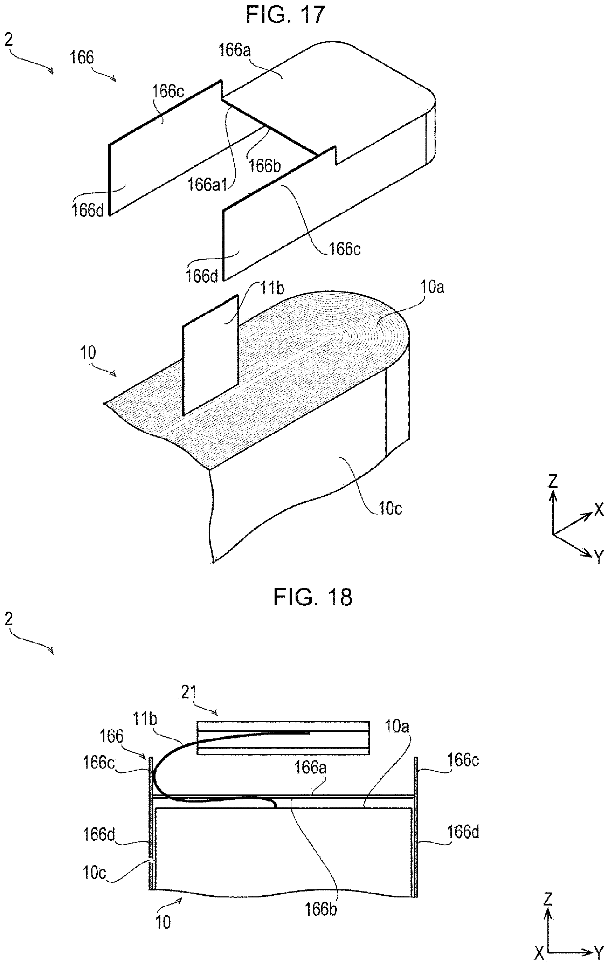

A configuration of a battery 2 is explained with reference to Figure 17 and Figure 18.

In the battery 2 in a second embodiment, for example, in a positive electrode tab cover 166 (a cover), an insertion section 166b is configured by a space between a pair of wall sections 166c. In the battery 2 in the second embodiment, the same reference numerals and signs are added to the same components as the components of the battery 1 in the first embodiment and explanation of the components is omitted. A manufacturing method for the battery 2 in the second embodiment is the same as the manufacturing method for the battery 1 in the first embodiment.

The manufacturing method for the battery 2 in the second embodiment is premised on a configuration in which one positive electrode tab 11b is provided. However, a configuration in which two or more positive electrode tabs are provided may be adopted.

In the positive electrode tab cover 166 (the cover), for example, as shown in Figure 17, a main body section 166a, the insertion section 166b, the pair of wall sections 166c, and a pair of side surface sections 166d are integrally formed. Components and materials of the positive electrode tab cover 166 are the same as the components and the materials of the positive electrode tab cover 66 shown in Figure 7 except a shape of the insertion section 166b. An outer edge 166a1 of the main body section 166a is located to connect the end portions in the X-axis direction of the pair of wall sections 166c. Therefore, the insertion section 166b is configured by the entire area between the pair of wall sections 166c. That is, in the positive electrode tab cover 166, the entire area between the pair of wall sections 166c is configured as the insertion section 166b. As shown in Figure 18, the positive electrode tab 11b curving in the Y-axis direction is in contact with one wall section 166c of the pair of wall sections 166c.

### (Effects of battery 2 and manufacturing method in second embodiment)

Effects of the battery 2 and the manufacturing method for the battery 2 are explained. Effects concerning the positive electrode tab cover 166 are explained below. The effects concerning the positive electrode tab cover 166 and effects concerning a negative electrode tab cover are the same. The battery 2 achieves the following effects in addition to the effects of the battery 1 in the first embodiment.

The insertion section 166b is configured by a space between the pair of wall sections 166c. With such a configuration, since the insertion section 166b is configured relatively large, it is possible to reduce the volume of the positive electrode tab cover 166. Therefore, it is possible to manufacture the positive electrode tab cover 166 at relatively low cost and reduce the weight of the positive electrode tab cover 166. With such a configuration, since the insertion section 166b is configured relatively large, when the positive electrode tab 11b and the insertion section 166b are inserted, it is possible to prevent the positive electrode tab 11b from interfering with the positive electrode tab cover 166. Therefore, it is possible to further improve the productivity of the battery 2.

In the battery 2 in the second embodiment, the configuration and the effects concerning the positive electrode tab cover 166 (the cover) are explained above. A configuration and effects concerning a negative electrode tab cover (a cover) are the same as the configuration and the effects concerning the positive electrode tab cover 166 explained above.

### [Third Embodiment]

### (Configuration of battery 3 and manufacturing method for battery 3 in third embodiment)

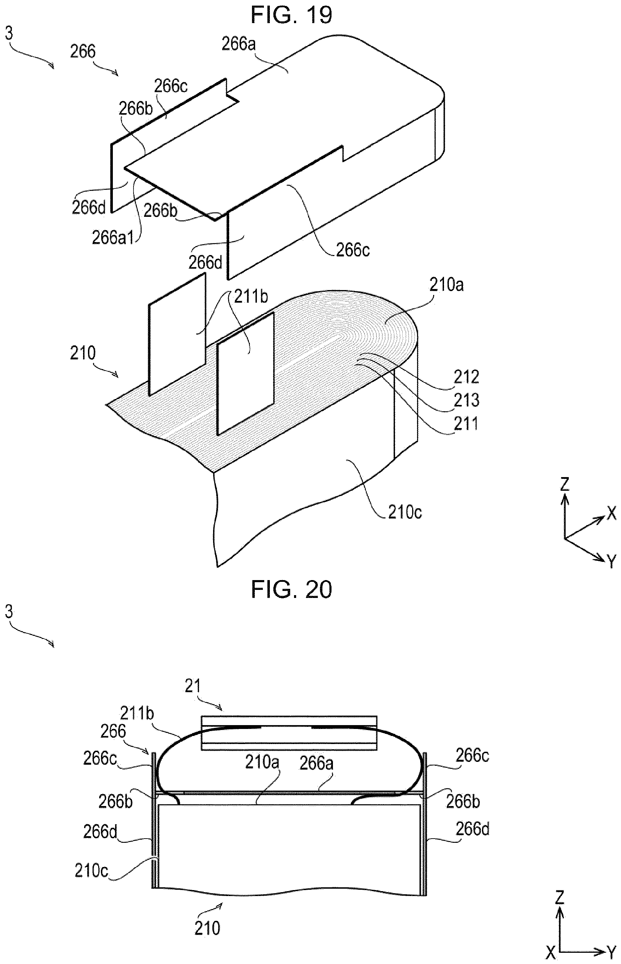

A configuration of a battery 3 is explained with reference to Figure 19 and Figure 20.

In the battery 3 in a third embodiment, for example, in a charge/discharge body 210, a plurality of positive electrode tabs 211b and a plurality of negative electrode tabs are included. In a positive electrode tab cover 266 (a cover), a pair of insertion sections 266b are configured to be respectively adjacent to wall sections 266c. In the third embodiment, components different from the components in the first embodiment are mainly explained. In explanation of a manufacturing method for the battery 3 in the third embodiment, only a manufacturing process specific to the battery 3 is explained. Explanation of the same manufacturing process as a manufacturing process for a general battery is omitted.

In the battery 3 in the third embodiment, two positive electrode tabs 211b projecting from the positive electrode tab cover 266 are joined to the positive electrode current collection plate 21 in a state in which the two positive electrode tabs 211b curve in directions different from each other and the distal ends of the two positive electrode tabs 211b face each other in the Y-axis direction. In this configuration, since the positive electrode tabs 211b are respectively formed in annular shapes and access from the side of the positive electrode tabs 211b is difficult, a contrivance is necessary when laser welding or resistance welding is performed from the side of the positive electrode tabs 211b. Therefore, the two positive electrode tabs 211b projecting from the positive electrode tab cover 266 may be curved in the same direction and configured such that the distal ends thereof are aligned in the Y-axis direction. In this configuration, since the side of the positive electrode tabs 211b can be sufficiently exposed to the outside, access from the side of the positive electrode tabs 211b is easy.

In the charge/discharge body 210, for example, as shown in Figure 19, the two positive electrode tabs 211b are included in a positive electrode 211. For example, as shown in Figure 20, each of the positive electrode tabs 211b is inserted into an insertion section 266b present in a relatively close position of the pair of insertion sections 266b of the positive electrode tab cover 266. Three or more positive electrode tabs 211b may be included in the positive electrode 211.

In the positive electrode tab cover 266 (the cover), for example, as shown in Figure 19, a main body section 266a, the pair of insertion sections 266b, a pair of wall sections 266c, and a pair of side surface sections 266d are integrally formed. Components and materials of the positive electrode tab cover 266 are the same as, for example, the components and the materials of the positive electrode tab cover 66 shown in Figure 7 except the pair of insertion sections 266b. The pair of insertion sections 266b is formed on both the sides in the X-axis direction of the main body section 266a to be respectively adjacent to the wall sections 266c. That is, portions of the pair of insertion sections 266b adjacent to the pair of wall sections 266c of the main body section 266a are formed to be cut out in the X-axis direction. The wall sections 266c of the positive electrode tab cover 266 directly face the insertion sections 266b in the X-axis direction. The length of the wall sections 266c in the Z-axis direction is the same as the width of the insertion sections 266b in a direction away from the wall sections 266c (the Y-axis direction). As shown in Figure 20, the positive electrode tabs 211b curving in the Y-axis direction are respectively in contact with both the wall sections 266c of the pair of wall sections 266c.

In the manufacturing method for the battery 3, the charge/discharge body 210 is covered by the positive electrode tab cover 266 while the pair of insertion sections 266b of the positive electrode tab cover 266 and the two positive electrode tabs 211b being inserted from the side of an outer edge 266a1 of the main body section 266a of the positive electrode tab cover 266.

Thereafter, the positive electrode tabs 211b and the positive electrode current collection plate 21 are joined. The two positive electrode tabs 211b are joined to the positive electrode current collection plate 21 in a state in which the two positive electrode tabs 211b curve in directions different from each other in the Y-axis direction and the distal ends of the two positive electrode tabs 211b face each other. Here, the positive electrode tabs 211b are included in the charge/discharge body 210 housed in the container 51. On the other hand, the positive electrode current collection plate 21 is included in the lid 52. When the positive electrode tabs 211b and the positive electrode current collection plate 21 are joined, the charge/discharge body 210 and the lid 52 are sufficiently separated and the charge/discharge body 210 and the lid 52 are made, for example, orthogonal, whereby joining portions of the positive electrode tabs 211b and the positive electrode current collection plate 21 are brought into a sufficiently exposed state to the outside. After the positive electrode tabs 211b and the positive electrode current collection plate 21 are joined, the charge/discharge body 210 in a state in which the insulation cover 61 and the positive electrode tab cover 266 are attached thereto is inserted into the container 51. Subsequently, the container 51 and the lid 52 in the orthogonal state are caused to face in order to join the container 51 and the lid 52. Subsequently, when the container 51 and the lid 52 are brought close in order to join the container 51 and the lid 52, each of the positive electrode tabs 211b curves in the Y-axis direction from a state in which the positive electrode tabs 211b extend in the Z-axis direction. Each of the positive electrode tabs 211b curving in the Y-axis direction is likely to come into contact with the wall sections 266c. In Figure 20, the positive electrode tabs 211b are in contact with the wall sections 266c.

After the plurality of positive electrode tabs 211b and the positive electrode current collection plate 21 are joined, the charge/discharge body 210 may be covered by the positive electrode tab cover 266 while the plurality of positive electrode tabs 211b being inserted into the pair of insertion sections 266b of the positive electrode tab cover 266.

### (Effects of battery 3 and manufacturing method in third embodiment)

Effects of the battery 3 and the manufacturing method for the battery 3 are explained. Effects concerning the positive electrode tab cover 266 are explained below. The effects concerning the positive electrode tab cover 266 and effects concerning a negative electrode tab cover are the same. The battery 3 achieves the following effects in addition to the effects of the battery 1 and the like in the first embodiment.

The wall sections 266c of the positive electrode tab cover 266 are adjacent to the insertion sections 266b. With such a configuration, it is possible to curve the positive electrode tabs 211b, into which the insertion section 266b are inserted, in the Y-axis direction toward the positive electrode current collection plate 21 while curving the positive electrode tabs 211b along the wall sections 266c. Therefore, it is possible to prevent the positive electrode tabs 211b from coming into contact with the inner surface 51c of the container 51. Therefore, the battery 3 can insulate the positive electrode tab 211b with the simple configuration explained above. It is possible to improve the productivity of the battery 3.

The length of the wall sections 266c of the positive electrode tab cover 266 in a direction away from one side section 210a of the charge/discharge body 210 (the Z-axis direction) is equal to or smaller than the width of the insertion section 266b in a direction away from the wall sections 266c along the one side section 210a of the charge/discharge body 210 (the Y-axis direction). With such a configuration, it is possible to form partially cut portions of the main body section 266a as the insertion sections 266b while partially cutting the main body section 266a and raising the partially cut portions in the Z-axis direction to form the wall sections 266c.

The plurality of positive electrode tabs 211b are inserted into any ones of the insertion sections 266b among the plurality of insertion sections 266b formed in the positive electrode tab cover 266. With such a configuration, it is possible to insert each of the positive electrode tabs 211b into the insertion section 266b present in a relatively close position among the plurality of insertion sections 266b. Therefore, it is possible to insert the positive electrode tabs 211b into the insertion sections 266b without greatly curving the positive electrode tabs 211b in the Y-axis direction between the main body section 266a and the one side section 210a.

In the battery 3 in the third embodiment, the configuration and the effects concerning the positive electrode tab cover 266 (the cover) are explained above. A configuration and effects concerning a negative electrode tab cover (a cover) are the same as the configuration and the effects concerning the positive electrode tab cover 266 explained above.

### [Fourth Embodiment]

### (Configuration of battery 4 and manufacturing method for battery 4 in fourth embodiment)

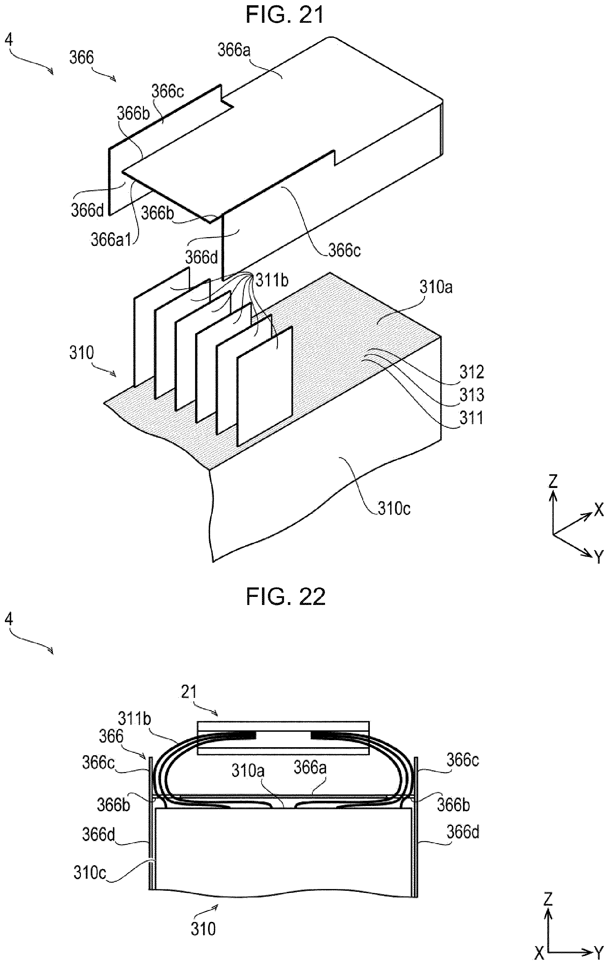

A configuration of a battery 4 is explained with reference to Figure 21 and Figure 22.

The battery 4 in a fourth embodiment is configured by a stacked type in which a charge/discharge body 310 is not wound. In the fourth embodiment, components different from the components in the third embodiment are mainly explained.

In the battery 4 in the fourth embodiment, six positive electrode tabs 311b projecting from a positive electrode tab cover 366 are joined to the positive electrode current collection plate 21 in a state in which a set of three of the positive electrode tabs 311b and a set of the other three of the positive electrode tabs 311b are curved in directions different from each other and the distal ends of the positive electrode tabs 311b face with one another in the Y-axis direction. In this configuration, since the positive electrode tabs 311b are respectively formed in annular shapes and access from the side of the positive electrode tabs 311b is difficult, a contrivance is necessary when laser welding or resistance welding is performed from the side of the positive electrode tabs 311b. Therefore, the six positive electrode tabs 311b projecting from the positive electrode tab cover 366 may be curved in the same direction and configured such that the distal ends thereof are aligned in the Y-axis direction. In this configuration, since the side of the positive electrode tabs 311b can be sufficiently exposed to the outside, access from the side of the positive electrode tabs 311b is easy.

The battery 4 in the fourth embodiment includes the charge/discharge body 310. The charge/discharge body 310 includes one side section 310a from which the positive electrode tabs 311b and negative electrode tabs project and an outer circumferential section 310c adjacent to the one side section 310a. The charge/discharge body 310 is configured by a stacked type in which a positive electrode 311 and a negative electrode 312 are stacked via a separator 313. The charge/discharge body 310 is configured by stacking pluralities of positive electrodes 311, separators 313, and negative electrodes 312 respectively formed in rectangular shapes in the order of the positive electrodes 311, the separators 313, the negative electrodes 312, and the separators 313. One positive electrode tab 311b is formed in each of the positive electrodes 311. One negative electrode tab is formed in each of the negative electrodes 312.

As a modification of the charge/discharge body 310, it is possible to adopt a stacked type in which a plurality of positive electrodes and a plurality of negative electrodes formed relatively short with respect to one separator formed long are alternately provided while being caused to face via the separator. This modification is a so-called Z-fold stacked type. In the charge/discharge body having such a configuration, the separator is folded and stacked, whereby the positive electrodes and the negative electrodes face via the separator.

In the positive electrode tab cover 366 (a cover), for example, as shown in Figure 21, a main body section 366a, a pair of insertion sections 366b, a pair of wall sections 366c, and a pair of side surface sections 366d are integrally formed. Components and materials of the positive electrode tab cover 366 are the same as the components and the materials of the positive electrode tab cover 266 shown in Figure 19 except the shape of corner portions of the pair of side surface sections 366d. In the charge/discharge body 310 of the stacked type, unlike the charge/discharge body 210 of a winding type, since the positive electrodes 311, the negative electrodes 312, and the separators 313 respectively having the rectangular shapes are stacked, corner portions are not curved. Therefore, the corner portions of the pair of side surface sections 366d of the positive electrode tab cover 366 are formed extremely small in a curvature radius compared with corner portions of the pair of side surface sections 266d of the positive electrode tab cover 266.

In a manufacturing method for the battery 4, the charge/discharge body 210 is covered by the positive electrode tab cover 366 while the pair of insertion sections 366b of the positive electrode tab cover 366 and, for example, six positive electrode tabs 311b being inserted from the side of an outer edge 366a1 of the main body section 366a of the positive electrode tab cover 366. For example, three positive electrode tabs 311b are respectively inserted into the pair of insertion sections 366b. Each of the positive electrode tabs 311b is inserted into the insertion section 366b present in a relatively close position of the pair of insertion sections 366b.

Thereafter, the positive electrode tabs 311b and the positive electrode current collection plate 21 are joined. Here, the positive electrode tabs 311b are included in the charge/discharge body 210 housed in a container. On the other hand, the positive electrode current collection plate 21 is included in a lid. When the positive electrode tabs 311b and the positive electrode current collection plate 21 are joined, the charge/discharge body 310 and the lid are sufficiently separated and the charge/discharge body 310 and the lid are made, for example, orthogonal, whereby joining portions of the positive electrode tabs 311b and the positive electrode current collection plate 21 are brought into a sufficiently exposed state to the outside. After the positive electrode tabs 311b and the positive electrode current collection plate 21 are joined, the charge/discharge body 310 in a state in which the insulation cover 61 and the positive electrode tab cover 366 are attached thereto is inserted into the container. Subsequently, the container and the lid in the orthogonal state are caused to face in order to join the container and the lid. Subsequently, when the container and the lid are brought close in order to join the container and the lid, each of the positive electrode tabs 311b curves in the Y-axis direction from a state in which the positive electrode tab 311b extends in the Z-axis direction. Each of the positive electrode tabs 311b curving in the Y-axis direction is likely to come into contact with any one wall section 366c directly or via another positive electrode tab 311b. In Figure 22, one positive electrode tab 311b is in contact with each of the pair of wall sections 366c.

After the plurality of positive electrode tabs 311b and the positive electrode current collection plate 21 are joined, the charge/discharge body 310 may be covered by the positive electrode tab cover 366 while the plurality of positive electrode tabs 311b being inserted into the pair of insertion sections 366b of the positive electrode tab cover 366.

### (Effects of battery 4 and manufacturing method in fourth embodiment)

Effects of the battery 4 and the manufacturing method for the battery 4 are explained. Effects concerning the positive electrode tab cover 366 are explained below. The effects concerning the positive electrode tab cover 366 and effects concerning a negative electrode tab cover are the same.

In the battery 4 in the fourth embodiment, the charge/discharge body 310 of a stacked type in which the positive electrode 311 and the negative electrode 312 are stacked via the separator 313 is provided. The charge/discharge body 310 is configured by stacking the pluralities of positive electrodes 311, the separators 313, and the negative electrodes 312 respectively formed in the rectangular shapes in the order of the separators 313, the negative electrodes 312, and the separators 313. That is, the battery 4 includes the plurality of positive electrode tabs 311b. Even with such a configuration, it is possible to prevent, with the wall sections 366c of the positive electrode tab cover 366, the positive electrode tabs 311b from coming into contact with the inner surface of the container. Therefore, in the battery 4, it is possible to insulate the positive electrode tabs 311b with the simple configuration explained above. It is possible to improve the productivity of the battery 4.

In the battery 4 in the fourth embodiment, the configuration and the effects concerning the positive electrode tab cover 366 (the cover) are explained above. A configuration and effects concerning a negative electrode tab cover (a cover) are the same as the configuration and the effects concerning the positive electrode tab cover 366 explained above.

### [Fifth Embodiment]

### (Configuration of battery 5 and manufacturing method for battery 5 in fifth embodiment)

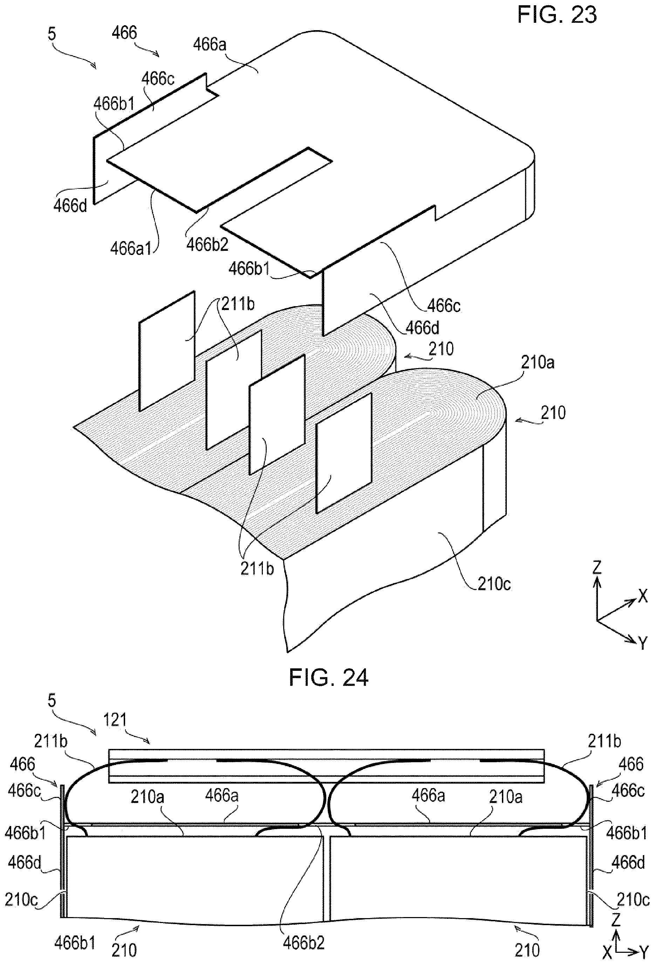

A configuration of a battery 5 is explained with reference to Figure 23 and Figure 24.

The battery 5 in a fifth embodiment is configured by arranging two charge/discharge bodies 210 side by side. In the fifth embodiment, components different from the components in the third embodiment are mainly explained.

In the battery 5 in the fifth embodiment, four positive electrode tabs 211b projecting from a positive electrode tab cover 466 are joined to a positive electrode current collection plate 121 in a state in which the four positive electrode tabs 211b curve in directions different from one another for each of the positive electrode tabs 211b of the same charge/discharge body 10 and the distal ends of the four positive electrode tabs 211b face one another in the Y-axis direction. In this configuration, since the positive electrode tabs 211b are respectively formed in annular shapes and access from the side of the positive electrode tabs 211b is difficult, a contrivance is necessary when laser welding or resistance welding is performed from the side of the positive electrode tabs 211b. Therefore, the four positive electrode tabs 211b projecting from the positive electrode tab cover 466 may be curved in the same direction for each of the positive electrode tabs 211b of the same charge/discharge body 10 and configured such that the distal ends thereof are aligned in the Y-axis direction. In this configuration, since the side of the positive electrode tabs 211b can be sufficiently exposed to the outside, access from the side of the positive electrode tabs 211b is easy.

The battery 5 in the fifth embodiment includes two charge/discharge bodies 210, each of which is the charge/discharge body 210 used in the battery 3 in the third embodiment. The two charge/discharge bodies 210 are arranged side by side in the latitudinal direction of the battery 5 (the Y-axis direction). The two charge/discharge bodies 210 are, for example, electrically connected in parallel.

The positive electrode current collection plate 121 is set approximately twice longer in the Y-axis direction than the positive electrode current collection plate 21 of the battery 1 to match the size of the two charge/discharge bodies 210 arranged side by side in the latitudinal direction of the battery 5 (the Y-axis direction).

In the positive electrode tab cover 466 (a cover), for example, as shown in Figure 23, a main body section 466a, a pair of side end insertion sections 466b1, a center insertion section 466b2, a pair of wall sections 466c, and a pair of side surface sections 466d are integrally formed. The pair of side end insertion sections 466b1 of the positive electrode tab cover 466 is equivalent to, for example, the pair of insertion sections 266b of the positive electrode tab cover 266 shown in Figure 19. Components and materials of the positive electrode tab cover 466 is the same as the components and the materials of the positive electrode tab cover 266 except the main body section 466a and the center insertion section 466b2. The main body section 466a of the positive electrode tab cover 466 is set approximately twice longer in the Y-axis direction than the main body section 266a of the positive electrode tab cover 266 of the battery 3 to match the size of the two charge/discharge bodies 210 arranged side by side in the latitudinal direction of the battery 5 (the Y-axis direction). The center insertion section 466b2 of the positive electrode tab cover 466 is equivalent to, for example, the insertion section 66b of the positive electrode tab cover 66 shown in Figure 7. The center insertion section 466b2 is formed in the main body section 466a in the position in the center of the pair of wall sections 466c.

In a manufacturing method for the battery 5, the two charge/discharge bodies 210 is covered by the positive electrode tab cover 466 while the pair of side end insertion sections 466b1 and the center insertion section 466b2 of the positive electrode tab cover 466 and, for example, four positive electrode tabs 311b being inserted from the side of an outer edge 466a1 of the main body section 466a of the positive electrode tab cover 466. The positive electrode tabs 211b of one of the charge/discharge bodies 210 are inserted into the pair of side end insertion sections 466b1. The positive electrode tabs 211b of the other of the charge/discharge bodies 210 are inserted into the center insertion section 466b2.

Thereafter, the positive electrode tabs 211b and the positive electrode current collection plate 121 are joined. Here, the positive electrode tabs 211b are included in the two charge/discharge bodies 210 housed in a container. On the other hand, the positive electrode current collection plate 121 is included in a lid. When the positive electrode tabs 211b and the positive electrode current collection plate 121 are joined, the two charge/discharge bodies 210 and the lid are sufficiently separated and the two charge/discharge bodies 210 and the lid are made, for example, orthogonal, whereby joining portions of the positive electrode tabs 211b and the positive electrode current collection plate 121 are brought into a sufficiently exposed state to the outside. At this time, the two charge/discharge bodies 210 are disposed such that one side sections 210a of the two charge/discharge bodies 210 face each other. After the positive electrode tabs 211b and the positive electrode current collection plate 121 are joined, the two charge/discharge bodies 210 in a state in which an insulation cover and the positive electrode tab cover 466 are attached thereto are arranged side by side and thereafter inserted into the container. Subsequently, the container and the lid are caused to face in order to join the container and the lid. Subsequently, when the container and the lid are brought close in order to join the container and the lid, each of the positive electrode tabs 211b curves in the Y-axis direction from a state in which the positive electrode tab 211b extends in the Z-axis direction. Each of the positive electrode tabs 211b inserted into the pair of side end insertion sections 466b1 and curving in the Y-axis direction is likely to come into contact with any one wall section 466c. In Figure 24, the positive electrode tabs 211b inserted into the pair of side end insertion sections 466b1 are in contact with the wall sections 466c.

After the plurality of positive electrode tabs 211b and the positive electrode current collection plate 121 are joined, the two charge/discharge bodies 210 arranged side by side may be covered by the positive electrode tab cover 466 while the plurality of positive electrode tabs 211b being inserted into the pair of side end insertion sections 466b1 and the center insertion section 466b2 of the positive electrode tab cover 466.

### (Effects of battery 5 and manufacturing method in fifth embodiment)

Effects of the battery 5 and the manufacturing method for the battery 5 are explained. Effects concerning the positive electrode tab cover 466 are explained below. The effects concerning the positive electrode tab cover 466 and effects concerning a negative electrode tab cover are the same.

The battery 5 in the fifth embodiment is configured by arranging the two charge/discharge bodies 210 side by side in the latitudinal direction of the battery 5 (the Y-axis direction). That is, the battery 5 includes the plurality of positive electrode tabs 211b. Even with such a configuration, it is possible to prevent, with the wall sections 466c of the positive electrode tab cover 466, the positive electrode tabs 211b from coming into contact with the inner surface of the container. Therefore, in the battery 5, it is possible to insulate the positive electrode tabs 211b with the simple configuration explained above. It is possible to improve the productivity of the battery 5.

In the battery 5 in the fifth embodiment, the configuration and the effects concerning the positive electrode tab cover 466 (the cover) are explained above. A configuration and effects concerning a negative electrode tab cover (a cover) are the same as the configuration and the effects concerning the positive electrode tab cover 466 explained above.

### [Sixth Embodiment]

### (Configuration of battery 6 and manufacturing method for battery 6 in sixth embodiment)

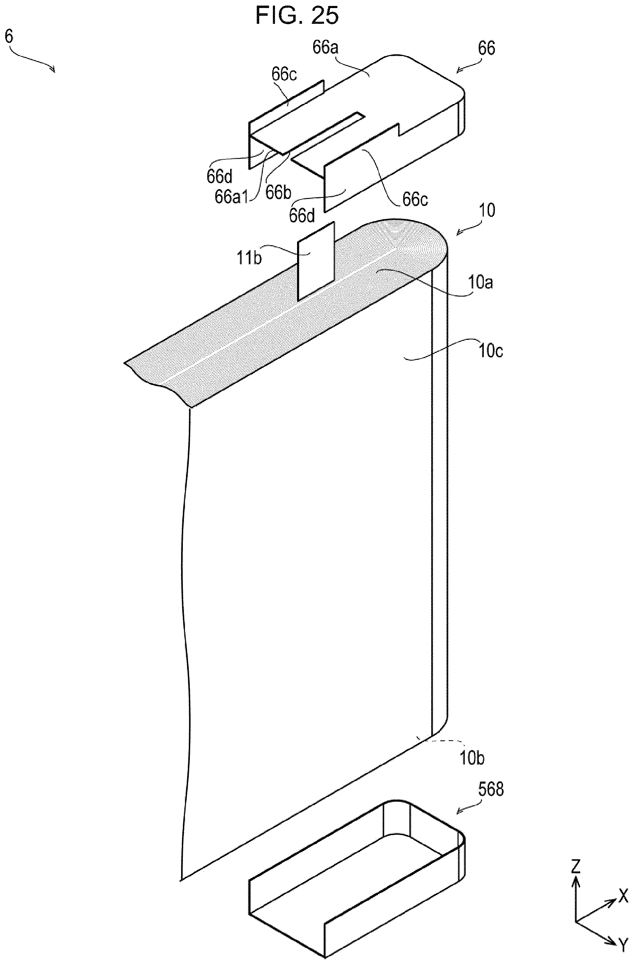

A configuration of a battery 6 is explained with reference to Figure 25.

The battery 6 in a sixth embodiment is configured by, in a state in which an upper part of the charge/discharge body 10 is covered by the positive electrode tab cover 66 and the negative electrode tab cover 67, further covering a lower part of the charge/discharge body 10 with a positive electrode side lower cover 568 (another cover) and a negative electrode side lower cover (another cover). In the battery 6 in the sixth embodiment, the same reference numerals and signs are added to the same components as the components of the battery 1 in the first embodiment and explanation of the components is omitted.

The positive electrode side lower cover 568 (the other cover) covers the charge/discharge body 10 to hold the charge/discharge body 10 from both sides in the Z-axis direction in conjunction with the positive electrode tab cover 66. The positive electrode tab cover 66 allows the positive electrode tab 11b to be inserted into the positive electrode tab cover 66 while covering the side of the one side section 10a of the charge/discharge body 10. On the other hand, the positive electrode side lower cover 568 covers the side of the other side section 10b of the charge/discharge body 10 to face the positive electrode tab cover 66 in the Z-axis direction. The positive electrode side lower cover 568 is equivalent to a component including the main body section 66a and the pair of side surface sections 66d of the positive electrode tab cover 66. The positive electrode side lower cover 568 insulates a part of the other side section 10b of the charge/discharge body 10 and a part of the outer circumferential surface 10c.

In a manufacturing method for the battery 6, the charge/discharge body 10 is covered by the positive electrode tab cover 66 and the positive electrode side lower cover 568 to be held from both the sides in the Z-axis direction.

### (Effects of battery 6 in sixth embodiment)

Effects of the battery 6 and the manufacturing method for the battery 6 are explained. Effects concerning the positive electrode side lower cover 568 are explained below. The effects concerning the positive electrode side lower cover 568 and effects concerning the negative electrode side lower cover are the same. The battery 6 achieves the following effects in addition to the effects of the battery 1 and the like in the first embodiment.

The positive electrode side lower cover 568 covers the charge/discharge body 10 to hold the charge/discharge body 10 from both sides in conjunction with the positive electrode tab cover 66. With such a configuration, it is possible to insulate the outer circumferential surface 10c of the charge/discharge body 10 and the inner surface 51c of the container 51 with the positive electrode side lower cover 568 and the positive electrode tab cover 66.

In the battery 6 in the sixth embodiment, the configuration and the effects concerning the positive electrode side lower cover 568 (the other cover) are explained above. A configuration and effects concerning the negative electrode side lower cover (the other cover) are the same as the configuration and the effects concerning the positive electrode side lower cover 568 explained above.

### [Seventh Embodiment]

### (Configuration of battery 7 and manufacturing method for battery 7 in seventh embodiment)

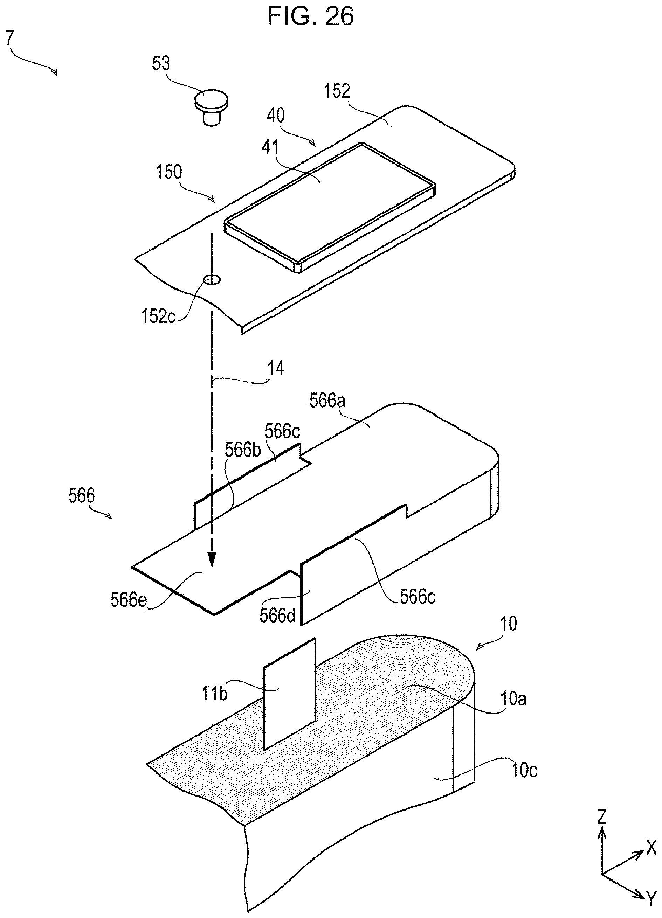

A configuration of a battery 7 is explained with reference to Figure 26.

In the battery 7 in a seventh embodiment, for example, a component that prevents peeling of an active material of electrodes (the positive electrode 11 and the negative electrode 12) is provided in a positive electrode tab cover 566 (a cover). The peeling of the active material of the electrodes (the positive electrode 11 and the negative electrode 12) is caused by the electrolyte 14 injected from a liquid injection hole 152c of a lid 152 toward the charge/discharge body 10 of the container 51. In a manufacturing method for the battery 7 in the seventh embodiment, only a manufacturing process specific to the battery 7 is explained.

In the lid 152, as shown in Figure 26, the liquid injection hole 152c into which the electrolyte 14 is injected toward the container 51 is provided in a periphery of the positive electrode terminal 41 to be adjacent to the positive electrode terminal 41 in the X-axis direction. In the lid 152, the liquid injection hole 152c is located further on the center side of the battery 7 than the positive electrode terminal 41. Components of the lid 152 are the same as the components of the lid 52 of the battery 7 except the components explained above. The liquid injection hole 152c of the lid 152 is included in a position facing the one side section 10a via a blocking section 566e of the positive electrode tab cover 566. Side surfaces of the positive electrode 11, the separator 13, and the negative electrode 12 are adjacent to the one side section 10a.

In the positive electrode tab cover 566 (the cover), as shown in Figure 26, a main body section 566a, an insertion section 566b, a pair of wall sections 566c, a pair of side surface sections 566d, and a blocking section 566e are integrally formed. Components and materials of the positive electrode tab cover 566 are the same as the components and the materials of the positive electrode tab cover 266 shown in Figure 19 except the insertion section 566b and the blocking section 566e. One insertion section 566b of the positive electrode tab cover 566 is formed unlike the pair of insertion sections 266b of the positive electrode tab cover 266. The blocking section 566e projects from the main body section 566a toward the center side of the battery 7. The blocking section 566e extends from the main body section 566a to between the liquid injection hole 152c of the lid 152 and the one side section 10a of the charge/discharge body 10 in the X-axis negative direction. The blocking section 566e is separated from the liquid injection hole 152c of the lid 152 and the one side section 10a of the charge/discharge body 10. The positive electrode tab cover 566 partially blocks a portion between the liquid injection hole 152c of the lid 152 and the one side section 10a of the charge/discharge body 10.

In a manufacturing method for the battery 7, the charge/discharge body 10 is covered by the positive electrode tab cover 566 while the insertion section 566b of the positive electrode tab cover 566 and the positive electrode tab 11b being inserted from the side of the outer edge of the main body section 566a of the positive electrode tab cover 566. Thereafter, in the manufacturing method for the battery 7, the electrolyte 14 is injected from the liquid injection hole 152c of the lid 152 toward the container 51. The electrolyte 14 injected from the liquid injection hole 152c of the lid 152 toward the container 51 comes into contact with the blocking section 566e of the positive electrode tab cover 566 and does not directly come into contact with the one side section 10a of the charge/discharge body 10. That is, the electrolyte 14 does not directly come into contact with the active material of the positive electrode 11 and the negative electrode 12. The electrolyte 14 is dispersed by the blocking section 566e and supplied to the charge/discharge body 10.

### (Effects of battery 7 and manufacturing method in seventh embodiment)

Effects of the battery 7 and the manufacturing method for the battery 7 are explained. Effects concerning the positive electrode tab cover 566 are explained below. The effects concerning the positive electrode tab cover 566 and effects concerning a negative electrode tab cover are the same. The battery 7 achieves the following effects in addition to the effects of the battery 1 and the like in the first embodiment.

The positive electrode tab cover 566 includes the blocking section 566e that partially blocks the portion between the liquid injection hole 152c of the lid 152 and the one side section 10a of the charge/discharge body 10. The manufacturing method for the battery 7 includes a step of providing the blocking section 566e between the liquid injection hole 152c of the lid 152 and the one side section 10a of the charge/discharge body 10 and a step of injecting the electrolyte 14 from the liquid injection hole 152c of the lid 152 toward the container 51. With such a simple configuration, it is possible to prevent the electrolyte 14 injected from the liquid injection hole 152c of the lid 152 from directly coming into contact with the active material of the electrodes (the positive electrode 11 and the negative electrode 12). Therefore, in the battery 7, it is possible to prevent, with the simple configuration explained above, peeling of the active material of the electrodes (the positive electrode 11 and the negative electrode 12) due to the electrolyte 14 injected from the liquid injection hole 152c of the lid 152.

In the battery 7, the electrolyte 14 injected from the liquid injection hole 152c of the lid 152 is diffused by the blocking section 566e and supplied to the charge/discharge body 10. Therefore, the electrolyte 14 is easily equally supplied to the charge/discharge body 10 compared with when the blocking section 566e is not provided in the battery 7. Therefore, the battery 7 can improve a battery characteristic of the charge/discharge body 10.

The battery 7 may have a configuration in which a blocking member is configured by a porous material and the electrolyte 14 is allowed to pass toward the one side section 10a of the charge/discharge body 10. In the case of such a blocking member, the electrolyte 14 injected from the liquid injection hole 152c of the lid 152 and having passed through the blocking member is led out in a state in which the electrolyte 14 is sufficiently dispersed from the blocking member toward the one side section 10a of the charge/discharge body 10. Therefore, even if the electrolyte 14 injected from the liquid injection hole 152c of the lid 152 directly comes into contact with the active material of the electrodes (the positive electrode 11 and the negative electrode 12), it is possible to sufficiently relax stress applied to the active material. Therefore, it is possible to prevent peeling of the active material of the electrodes (the positive electrode 11 and the negative electrode 12) due to the electrolyte 14 injected from the liquid injection hole 152c of the lid 152.

The battery 7 may have a configuration in which the separator 13 (the insulating member) is not used and an insulation layer is stacked on at least one of the positive electrode active material layer 11T of the positive electrode 11 and the negative electrode active material layer 12T of the negative electrode 12. The battery 7 may have a configuration in which the separator 13 is used and the insulation layer is stacked on the separator 13. The insulation layer functions as the separator 13. The insulation layer is formed by, for example, a porous insulating material having insulation and is configured to be impregnated with the electrolyte 14. The insulating material preferably has heat resistance. With such a configuration, it is possible to prevent peeling of the insulating material included in the electrodes (the positive electrode 11 and the negative electrode 12) in addition to preventing the peeling of the active material included in the electrodes.

The blocking section 566e projects from the main body section 566a and extends to between the liquid injection hole 152c of the lid 152 and the one side section 10a of the charge/discharge body 10. With such a configuration, it is possible to embody the blocking section 566e with an extremely simple configuration.

In the battery 7 in the seventh embodiment, the configuration and the effects concerning the positive electrode tab cover 566 (the cover) are explained above. A configuration including the blocking section 566e in the negative electrode tab cover (the cover) may be adopted instead of the configuration including the blocking section 566e in the positive electrode tab cover 566 (the cover). In the case of such a configuration, the liquid injection hole 152c of the lid 152 is provided in a periphery of the negative electrode terminal 42 to be adjacent to the negative electrode terminal 42 in the X-axis direction.

### [Eighth Embodiment]

### (Configuration of battery 8 and manufacturing method for battery 8 in eighth embodiment)

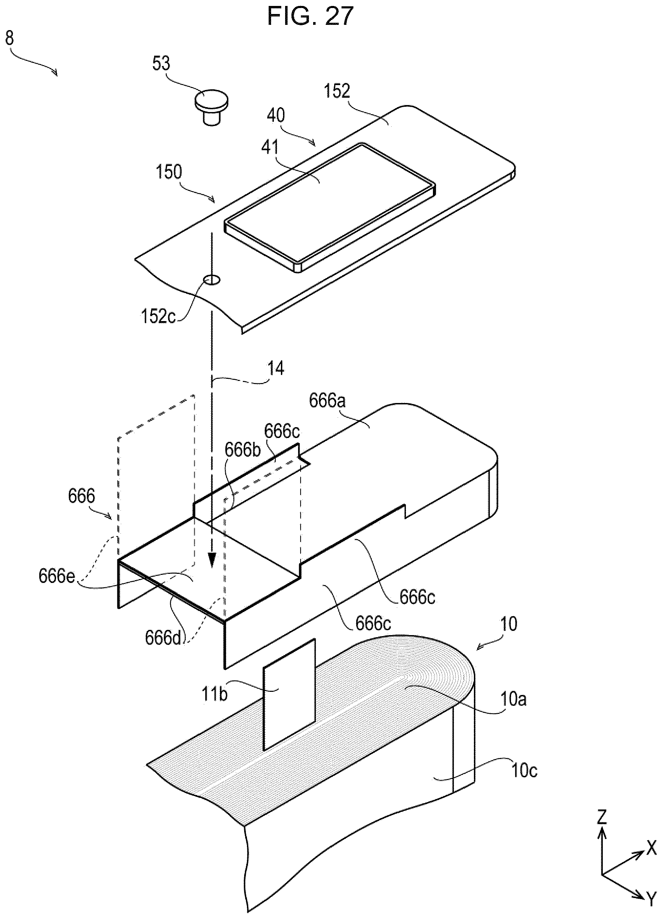

A configuration of a battery 8 is explained with reference to Figure 27.

In the battery 8 in an eighth embodiment, as in the battery 7 in the seventh embodiment, for example, a component that prevents peeling of the active material of the electrodes (the positive electrode 11 and the negative electrode 12) is provided in a positive electrode tab cover 666 (a cover). Most of a manufacturing method for the battery 8 in the eighth embodiment is the same as the manufacturing method for the battery 7 in the seventh embodiment. In the manufacturing method for the battery 8 in the eighth embodiment, only a manufacturing process specific to the battery 8 is explained.

In the positive electrode tab cover 666 (the cover), as shown in Figure 27, a main body section 666a, an insertion section 666b, a pair of wall sections 666c, a pair of side surface sections 666d, and a pair of blocking sections 666e are integrally formed. Components of the positive electrode tab cover 666 are the same as the components of the positive electrode tab cover 566 shown in Figure 26 except the pair of side surface sections 666d and the pair of blocking sections 666e. The pair of side surface sections 666d extends in the X-axis negative direction to a portion equivalent to the blocking section 566e of the positive electrode tab cover 566. That is, the pair of side surface sections 666d is formed longer in the X-axis direction than the pair of side surface sections 566d of the positive electrode tab cover 566. The pair of blocking sections 666e is formed in a rectangular shape. The pair of blocking sections 666e projects from the side edge of one side surface section 666d toward the side edge of the other side surface section 666d to respectively extend across the pair of side surface sections 666d. For example, folds or perforations are formed in the boundaries between the blocking sections 666e and the side surface sections 666d. The pair of blocking sections 666e is separated from the liquid injection hole 152c of the lid 152 and the one side section 10a of the charge/discharge body 10. The pair of blocking sections 666e partially blocks a portion between the liquid injection hole 152c of the lid 152 and the one side section 10a of the charge/discharge body 10. The pair of blocking sections 666e is joined to be overlap each other. The blocking sections 666e are not limited to be paired and may be configured by one of the blocking sections 666e.

In the manufacturing method for the battery 8, the charge/discharge body 210 is covered by the positive electrode tab cover 666 while the insertion section 666b of the positive electrode tab cover 666 and the positive electrode tab 11b being inserted from the side of the outer edge of the main body section 666a of the positive electrode tab cover 666. Thereafter, the pair of blocking sections 666e is folded and superimposed to be joined. The manufacturing method for the battery 8 after that is the same as the manufacturing method for the battery 7 in the seventh embodiment.

### (Effects of battery 8 and manufacturing method in eighth embodiment)

Effects of the battery 8 and the manufacturing method for the battery 8 are explained. Effects concerning the positive electrode tab cover 666 are explained below. The effects concerning the positive electrode tab cover 666 and effects concerning a negative electrode tab cover are the same. The battery 8 achieves the following effects in addition to the effects of the battery 7 and the like in the seventh embodiment.

The blocking sections 666e project from the side surface sections 666d and extend to between the liquid injection hole 152c of the lid 152 and the one side section 10a of the charge/discharge body 10. With such a configuration, it is possible to embody the blocking sections 666e with an extremely simple configuration.

In the battery 8 in the eighth embodiment, the configuration and the effects concerning the positive electrode tab cover 666 (the cover) are explained above. A configuration including the blocking sections 666e in the negative electrode tab cover (the cover) may be adopted instead of the configuration including the blocking sections 666e in the positive electrode tab cover 666 (the cover). In the case of such a configuration, the liquid injection hole 152c of the lid 152 is provided in a periphery of the negative electrode terminal 42 to be adjacent to the negative electrode terminal 42 in the X-axis direction.

The battery of the present invention is not limited to the configurations described in the embodiments and can be configured as appropriate based on the contents described in the claims.

The battery of the present invention is not limited to a lithium ion battery. The battery of the present invention can be applied to, for example, a nickel hydrogen battery and a lead battery. The battery of the present invention is not limited to a secondary battery. The battery of the present invention can be applied to a primary battery. Each of the embodiments is explained in detail or simply in order to clearly explain the present invention and does not always need to include all the components explained above and may include not-shown components. A part of components in a certain embodiment may be deleted, substituted by components in other embodiments, or combined with components in the other embodiments.

### Reference Signs List

1, 2, 3, 4, 5, 6, 7, 8 battery, 10, 110, 210, 310 charge/discharge body, 10a, 210a, 310a one side section (side section), 11, 111, 211, 311 positive electrode (electrode), 11b, 211b, 311b positive electrode tab (electrode tab), 11c side edge, 12, 312 negative electrode (electrode), 12b negative electrode tab (electrode tab), 12c side edge, 13, 313 separator (insulating member), 14 electrolyte, 51 container, 51c inner surface, 52, 152 lid, 152c, 152c liquid injection hole, 66, 166, 266, 366, 466, 566, 666 positive electrode tab cover (cover), 67 negative electrode tab cover (cover), 66a, 166a, 266a, 366a, 466a, 566a, 666a main body section, 66a1, 166a1, 266a1, 366a1, 466al outer edge, 66b, 166b, 266b, 366b, 566b, 666b insertion section, 466b1 side end insertion section (insertion section), 466b2 center insertion section (insertion section), 66c, 166c, 266c, 366c, 466c, 566c, 666c wall section, 66d, 166d, 266d, 366d, 466d, 566d, 666d side surface section, 566e, 666e blocking section, 568 positive electrode side lower cover (another cover).

## Claims

1. A battery comprising:
a charge/discharge body including an electrode including an electrode tab;
a cover that faces a side section of the charge/discharge body, from which the electrode tab projects, and covers and insulates the charge/discharge body; and
a container that houses the charge/discharge body covered by the cover and has conductivity, wherein
the cover includes:
a main body section that covers the side section of the charge/discharge body;
an insertion section formed in a cutout shape including an opening at an outer edge of the main body section, the electrode tab being inserted into the insertion section; and
a wall section that extends in a direction further away from the side section than the main body section and separates an inner surface of the container and the insertion section.

2. The battery according to claim 1, wherein the wall section extends along a side edge of the electrode together with the electrode tab.

3. The battery according to claim 1 or 2, wherein the main body section is separated from the side section of the charge/discharge body.

4. The battery according to any one of claims 1 to 3, wherein the wall section is separated from the insertion section.

5. The battery according to any one of claims 1 to 3, wherein
a pair of the wall sections is formed, and
the insertion section is configured by a space between the pair of wall sections.

6. The battery according to any one of claims 1 to 3, wherein the wall section is adjacent to the insertion section.

7. The battery according to claim 6, wherein a length of the wall section in a direction away from the side section of the charge/discharge body is equal to or smaller than a width of the insertion section in a direction away from the wall section along the side section of the charge/discharge body.

8. The battery according to any one of claims 1 to 4, 6, and 7, wherein
a plurality of the electrode tabs are provided in the electrode,
a plurality of the insertion sections are formed in the main body section, and
the electrode tabs are inserted into any ones of the insertion sections.

9. The battery according to any one of claims 1 to 8, wherein the cover further includes, between the main body section and the side section of the charge/discharge body, a side surface section stretching to the main body section and facing an outer circumferential surface of the charge/discharge body.

10. The battery according to any one of claims 1 to 9, further comprising another cover that covers and insulates an outer circumferential surface of the charge/discharge body, wherein
the other cover covers the charge/discharge body to hold the charge/discharge body from both sides in conjunction with the cover.

11. The battery according to any one of claims 1 to 10, wherein
the charge/discharge body is configured by winding or stacking the electrode via an insulating member,
the battery further comprises a lid including a liquid injection hole into which an electrolyte is injected toward the container, facing the side section adjacent to the electrode and the insulating member, and sealing the container, and
the cover further includes a blocking section that partially blocks a portion between the liquid injection hole of the lid and the side section of the charge/discharge body.

12. The battery according to claim 11, wherein the blocking section separates from the liquid injection hole of the lid and the side section of the charge/discharge body, projects from the main body section, and extends to between the liquid injection hole of the lid and the side section of the charge/discharge body.

13. The battery according to claim 11 or 12, wherein the blocking section separates from the liquid injection hole of the lid and the side section of the charge/discharge body, projects from a side surface section facing an outer circumferential surface of the charge/discharge body of the cover, and extends to between the liquid injection hole of the lid and the side section of the charge/discharge body.

14. A manufacturing method for a battery including:
a charge/discharge body including an electrode including an electrode tab;
a cover that faces a side section of the charge/discharge body, from which the electrode tab projects, and covers and insulates the charge/discharge body; and
a container that houses the charge/discharge body covered by the cover and has conductivity,
the cover including:
a main body section that covers the side section of the charge/discharge body;
an insertion section formed in a cutout shape including an opening at an outer edge of the main body section, the electrode tab being inserted into the insertion section; and
a wall section that extends in a direction further away from the side section than the main body section and separates an inner surface of the container and the insertion section,
the manufacturing method comprising a step of covering the charge/discharge body with the cover while inserting the electrode tab and the insertion section from a side of the outer edge of the main body section.

15. The manufacturing method for a battery according to claim 14, wherein, in the step, the electrode tab and the insertion section are inserted with the electrode tab gripped.
